# EUROPÄISCHE PATENTANMELDUNG

(11) **EP 2 042 034 A2**
(43) Veröffentlichungstag der Anmeldung: **01.04.2009**
(21) Anmeldenummer: 08017013.7
(22) Anmeldetag: 26.09.2008
(51) Int. Cl.: A01K 5/02

(54) **Hängewagenbahnsystem, Stall und Verfahren zur Fütterung und Reinigung**

(30) Priorität: 26.09.2007 DE 102007045997
(71) Anmelder: Hartmann Grundbesitz GmbH & Co. KG, 92265 Edelsfeld (DE)
(72) Erfinder: Hartmann, Hans, 92265 Edelsfeld (DE)
(74) Vertreter: Spott, Gottfried

(57) **Zusammenfassung**

Die Erfindung betrifft ein Hängewagenbahnsystem für einen Kuhstall zur Versorgung eines Futtertisches mit Futter, Reinigung des Futtertisches und von nebeneinander angeordneten und an einen Laufgang angrenzenden Liegeboxen für Kühe und Versorgung der Liegeboxen mit Einstreumaterial, umfassend mindestens einen Hängwagen, der mindestens einen Vorratsbehälter zur Aufnahme des Futters und/oder Einstreumaterials, mindestens einen Auswurf für das Futter und/oder Einstreumaterial und eine Reinigungseinrichtung umfasst, wobei der Hängewagen über den Futtertisch und die nebeneinander angeordneten Liegeboxen bewegbar ist, einen Stall, der das Hängewagenbahnsystem umfasst, sowie ein Verfahren, welches das Hängewagenbahnsystem einsetzt zur Versorgung eines Futtertisches mit Futter, Reinigung des Futtertisches und von nebeneinander angeordneten und an einen Laufgang angrenzenden Liegeboxen für Kühe und Versorgung der Liegeboxen mit Einstreumaterial.

## Beschreibung

Die vorliegende Erfindung betrifft ein Hängewagenbahnsystem für einen Kuhstall, einen Stall, der ein solches Hängewagenbahnsystem umfasst, und ein Verfahren zur Versorgung eines Futtertisches in einem Kuhstall mit Futter, Reinigung des Futtertisches und von nebeneinander angeordneten und an einen Laufgang angrenzenden Liegeboxen für Kühe und Versorgung der Liegeboxen mit Einstreumaterial.

### Stand der Technik

Bei einer Tierhaltung zur Milchproduktion nehmen die Tiere üblicherweise in einem Fressbereich Futter und Wasser zu sich oder ruhen, überwiegend unter Wiederkäuen, in einem Liegebereich. Dabei müssen die Tiere gemolken und ihr Stall gereinigt werden. Das Melken der Tiere, insbesondere bei Kühen, und das Reinigen des Stalls, insbesondere des Liegebereichs beansprucht herkömmlicherweise einen sehr großen Zeit- und Arbeitsaufwand. Zur Reduzierung der Arbeitszeit und des Arbeitsaufwands beim Melken wurden in den letzten Jahren Melkroboter eingesetzt. Ein Melkroboter ist ein automatisches Melksystem. Er wird in einem Freilaufstall so aufgebaut, dass sich die Tiere davon selbst melken lassen können. Dieser Einsatz eines Melkroboters bringt jedoch folgende Nachteile mit sich. Manche Tiere wollen sich nicht freiwillig in regelmäßigen Abständen von dem Melkroboter melken lassen, so dass ihre und damit die gesamte Milchproduktion nicht gesteigert oder optimiert werden kann. In anderen Fällen wollen manche Tiere überhaupt nicht von einem Melkroboter gemolken werden, so dass sie schließlich keine Milch mehr produzieren. Daher müssen die Tiere beim Einsatz eines herkömmlichen Melkroboters genau überwacht und gegebenenfalls einzeln zum Melkroboter getrieben werden. Daher konnte der Einsatz von Melkrobotern den Arbeits- und Zeitaufwand für das Betriebspersonal beim Melken nicht wesentlich senken. Darüber hinaus ging die durchschnittliche Milchproduktion einer Herde pro Tier sogar zurück, da die Überwachung insbesondere bei großen Herden bzw. Ställen nicht lückenlos erfolgen kann und so einige Tiere nicht oft genug oder gar nicht gemolken werden. Außerdem ist eine systematische Reinigung der einzelnen Liegeboxen in dem Liegebereich der Tiere nicht zu bewerkstelligen, wenn die Tiere unsystematisch nach der oben beschriebenen Art und Weise von einem Melkroboter gemolken werden. Der Arbeits- und Zeitaufwand für eine Reinigung des Liegebereichs wurde sogar erhöht. Weiterhin ist eine Reinigung des Liegebereichs nicht auf eine Art und Weise möglich, bei der alle Kühe in ihren Ruhephasen und vor allem beim Wiederkäuen, das für die Milchproduktion eine bedeutende Rolle spielt, nicht gestört werden.

Die DE 10 2004 016 720 A1 von Hartmann beschreibt eine Reinigungseinrichtung zum Reinigen von nebeneinander angeordneten und an einen Laufgang angrenzenden Liegeboxen für Kühe, wobei die Reinigungseinrichtung an den nebeneinander angeordneten Liegeboxen vorbei bewegbar ist und mindestens eine die Liegeflächen der Liegeboxen reinigende Bürste umfasst. Diese Reinigungseinrichtung kann an einer Viehtreibeinrichtung befestigt sein. Ferner wird in dieser Patentanmeldung von Hartmann beschrieben, dass diese Viehtreibeinrichtung eine Streueinrichtung umfassen kann, mit der Einstreu in die Liegeboxen eingebracht werden kann. Die Viehtreibeinrichtung, Reinigungseinrichtung und Streueinrichtung werden jedoch in einem Laufgang von einem zum anderen Ende vor- und wieder zurückbewegt. Futter kann damit nicht auf den Futtertisch gebracht werden. Ein Hängewagenbahnsystem zur Reinigung von Liegeboxen, Versorgung der Liegeboxen mit Einstreumaterial oder zum Einsatz als Viehtreibereinrichtung ist nicht beschrieben.

Die DE 10 2004 016 721 A1 von Hartmann beschreibt ein Verfahren zum Melken von Kühen, umfassend: (a) ein Zusammentreiben mindestens einer ersten Gruppe von Kühen, die sich in einem der ersten Gruppe zugeordneten Liege- und Fressbereich eines Stalls aufhalten, auf einen ersten Laufgang, der zwischen dem Liege- und Fressbereich angeordnet ist, wobei der Liegebereich nebeneinander liegende Liegeboxen umfasst; (b) ein Treiben der in Schritt (a) auf den ersten Laufgang zusammengetriebenen ersten Gruppe von Kühen in einen zweiten Laufgang, der sich an einem Ende des ersten Laufgangs befindet; (c) ein Hineintreiben der Gruppe von Kühen von dem zweiten Laufgang, gegebenenfalls über einen Vorwartehof, in einen Melkraum, in dem die Kühe gemolken werden; und (d) ein Zurücktreiben der gemolkenen Kühe in den der ersten Gruppe zugeordneten Liege- und Fressbereich.

Ferner sind Hängewagenbahnsysteme bekannt, mit denen ein Futtertisch gesäubert und frisches Futter aufgebracht werden kann. Bei diesen Hängewagenbahnsystemen werden die Hängewagen im gesamten Stall nur in einem geringen Abstand über den Boden bewegt. Eine Reinigung von an einen Laufgang angrenzenden Liegeboxen für Kühe und eine Versorgung der Liegeboxen mit Einstreumaterial damit ist jedoch nicht beschrieben.

Mit dem Stand der Technik kann mit zwei verschiedenen Systemen einerseits ein systematisches Melken und Reinigen sowie andererseits ein automatisches Füttern erfolgen. Der Grad an Automatisierung in einem Kuhstall kann daher noch erhöht werden. Ferner besteht weiterhin ein Bedarf daran den Personalaufwand pro Tier im Stall noch weiter zu verringern. Die hygienischen Verhältnisse in einem Kuhstall zur Milchproduktion und die Milchproduktion der Tiere können daher noch verbessert werden.

Es ist daher eine Aufgabe der vorliegenden Erfindung die Nachteile aus dem Stand der Technik zu beseitigen. Insbesondere soll ein Hängewagenbahnsystem für einen Kuhstall, ein Stall, der ein solches Hängewagenbahnsystem umfasst und ein Verfahren zur Versorgung eines Futtertisches in einem Kuhstall mit Futter, zur Reinigung des Futtertisches und von nebeneinander angeordneten und an einen Laufgang angrenzenden Liegeboxen für Kühe und zur Versorgung der Liegeboxen mit Einstreumaterial bereitgestellt werden, wodurch nicht nur die hygienischen Verhältnisse in dem Stall verbessert werden, sondern gleichzeitig auch die Produktivität der Tiere und damit die Milchproduktion gesteigert und der Arbeits- und Zeitaufwand für das Personal bei der Milchproduktion verringert wird.

### Offenbarung der Erfindung

Die oben genannte Aufgabe wird gelöst durch ein Hängewagenbahnsystem für einen Kuhstall nach Anspruch 1 zur
(a) Versorgung eines Futtertisches mit Futter,
(b) Reinigung des Futtertisches und von nebeneinander angeordneten und an einen Laufgang angrenzenden Liegeboxen für Kühe und
(c) Versorgung der Liegeboxen mit Einstreumaterial,
   umfassend mindestens einen Hängwagen, der
   (i) mindestens einen Vorratsbehälter zur Aufnahme des Futters und/oder Einstreumaterials,
   (ii) mindestens einen Auswurf für das Futter und/oder Einstreumaterial und
   (iii) eine Reinigungseinrichtung umfasst,
wobei der Hängewagen über den Futtertisch und die nebeneinander angeordneten Liegeboxen bewegbar ist.

Dazu kann ein Schienensystem des Hängewagenbahnsystems so angeordnet sein, dass mindestens ein Hängewagen über jeden Futtertisch und jede Liegebox bewegt werden kann. Das Schienensystem umfasst vorzugsweise mehrere Schienenkörper, die hintereinandergereiht das Schienensystem ergeben. Bei einer bevorzugten Ausführungsform umfasst das Hängewagenbahnsystem mehrere Hängewagen, die in dem Schienensystem bewegt werden können.

Ein Hängewagen umfasst mindestens einen Vorratsbehälter zur Aufnahme des Futters und/oder Einstreumaterials. Besonders bevorzugt umfasst ein Hängewagen mindestens einen Vorratsbehälter zur Aufnahme von Futter und mindestens einen Vorratsbehälter zur Aufnahme von Einstreumaterial. Diese Ausführungsform hat den Vorteil, dass Futter nicht mit Einstreumaterial vermischt oder verunreinigt werden kann. Bei einer weiteren besonders bevorzugten Ausführungsform umfasst ein Hängewagen mehrere Vorratsbehälter für verschiedenes Futter. Dann kann auf spezielle Tiere oder Tiergruppen abgestimmtes und vorgesehenes Futter ohne Gefahr einer Durchmischung oder Verunreinigung mit anderem Futter nur mit dem abgestimmten oder vorgesehenen Futter aus dem entsprechenden Vorratsbehälter zu den Tieren oder Tiergruppen gebracht werden.

Wenn ein Hängewagen nur einen Vorratsbehälter zur Aufnahme des Futters oder Einstreumaterials umfasst, wird der Hängewagen bei einem erfindungsgemäßen Verfahren, wenn der Vorratsbehälter mit Futter befüllt ist, zur Reinigung und Versorgung eines Futtertisches mit Futter eingesetzt. Vor einer Versorgung von nebeneinander angeordneten und an einen Laufgang angrenzenden Liegeboxen für Kühe mit Einstreumaterial wird der Vorratsbehälter mit Einstreumaterial befüllt. Im Allgemeinen ist es bevorzugt, dass ein Hängewagen bei einem Versorgen eines Futtertisches mit Futter dabei auch diesen reinigt und zwar unmittelbar bevor frisches Futter auf den Futtertisch gebracht wird. Altes Futter, das bei der Reinigung mit der Reinigungseinrichtung vom Futtertisch entfernt wird, kann bei einer bevorzugten Ausführungsform im Hängewagen gesammelt werden. Dazu kann der Hängewagen der Erfindung einen weiteren Behälter, einen Sammelbehälter für "altes" Futter oder Futterreste, umfassen. Außerdem ist es im Allgemeinen bevorzugt, dass ein Hängewagen bei einem Versorgen von Liegeboxen mit Einstreumaterial dabei diese auch reinigt und zwar vorzugsweise unmittelbar bevor frisches Einstreumaterial auf die gereinigten Liegeboxen gebracht wird. Altes und in der Regel schmutziges Einstreumaterial, das bei der Reinigung mit der Reinigungseinrichtung von den Liegeboxen entfernt wird, kann bei einer bevorzugten Ausführungsform im Hängewagen gesammelt werden. Dazu kann der Hängewagen der Erfindung einen weiteren Behälter, einen Sammelbehälter für altes Einstreumaterial, umfassen. Bei einer besonders bevorzugten Ausführungsform wird altes Einstreumaterial getrennt von altem Futter in einem getrennten Sammelbehälter gesammelt. In der Regel kann altes Futter noch weiter verwendet werden, z. B. für die Mast von Schweinen. Altes Einstreumaterial kann auch wiederverwendet werden, z. B. bei der Herstellung von Naturdünger. Eine bevorzugte Ausführungsform eines Hängewagens umfasst daher zwei Sammelbehälter, einen für altes Futter und einen für altes und in der Regel verunreinigtes Einstreumaterial.

Bei einer weiteren Ausführungsform umfasst ein Hängewagen zwei Vorratsbehälter, einen für Futter und einen für Einstreumaterial, jeweils mit einem Auswurf für das Futter bzw. das Einstreumaterial und jeweils einem Auswurf.

Bei einer besonders bevorzugten Ausführungsform der Erfindung umfasst das Hängewagenbahnsystem mindestens zwei Hängewägen mit jeweils einem Vorratsbehälter zur Aufnahme von Futter bzw. Einstreumaterial.

Die Reinigungseinrichtung kann mindestens eine Saugeinrichtung und/oder mindestens ein Räumschild und/oder mindestens eine Bürste zur Reinigung des Futtertisches und/oder der Liegeflächen der Liegeboxen umfassen. Vorzugsweise ist die mindestens eine Bürste rotierbar. Dabei kann ihre Rotationsachse gegenüber der Vertikalen zur Liegefläche der Liegebox geneigt sein, und die nebeneinander angeordneten Liegeboxen können kontinuierlich durch die an dem Hängewagen befestigte Reinigungseinrichtung gereinigt werden. Bei einer weiteren Ausführungsform der Erfindung ist die Bürste rotierbar, wobei ihre Rotationsachse im Wesentlichen parallel zu dem Laufgang verläuft, an den die Liegeboxen angrenzen. Diese Ausführungsform erlaubt wie die Verwendung einer Saugeinrichtung oder eines Räumschilds eine kontinuierliche Reinigung der nebeneinanderliegenden Liegeboxen. Eine kontinuierliche Reinigung ist besonders vorteilhaft in sehr kurzer Zeit, systematisch und gründlich durchführbar.

Ferner kann die Bürste bei der vorliegenden Erfindung gemäß einer bevorzugten Ausführungsform in jeder Liegebox in der Richtung von dem Kopfende der Liegebox zu dem Ende der Liegebox, das dem Laufgang zugewandt ist, bewegbar sein. Dadurch kann die Gründlichkeit der Reinigung vorteilhaft weiter erhöht werden.

Die Reinigungseinrichtung kann so ausgeführt sein und ein Reinigungsverfahren kann so ausgeführt werden, dass das Reinigen der Liegeboxen in dem Drittel der einzelnen Liegeboxen erfolgt, das einem Laufgang, insbesondere einem ersten oder weiteren Laufgang wie unten erläutert, zugewandt ist. Diese Ausführungsform ist zeitsparend und effektiv, da im Wesentlichen nur in diesem Bereich der Liegeboxen Verunreinigungen erfolgen. Bei einer weiteren Ausführungsform wird jeweils die gesamte Liegefläche einer Liegebox gereinigt.

Weiterhin ist bevorzugt dass nach dem Reinigen der Liegeboxen frisches Einstreumaterial, das vorzugsweise Strohhäcksel oder Sägemehl umfasst, auf die Liegeboxen aufgebracht wird, vorzugsweise auf das Drittel der einzelnen Liegeboxen, das einem Laufgang, insbesondere ersten oder weiteren Laufgang, zugewandt ist.

Bei einer besonders bevorzugten Ausführungsform der Erfindung ist der mindestens eine Hängewagen an den Futtertisch eines bevorzugten Stalls angepasst. Dieser mindestens eine Hängewagen hat eine Breite von höchstens 1,20 m, vorzugsweise höchstens 1,00 m, besonders bevorzugt höchstens 0,90 m, ganz besonders bevorzugt von höchstens 0,80 m. Er ist somit in einem bevorzugten Stall einsetzbar, der einen schmalen Futtertisch mit einer Breite von höchstens 1,30, vorzugsweise höchstens 1,10 m, besonders bevorzugt höchstens 1,00 m, ganz besonders bevorzugt von höchstens 0,90 m aufweist. Ein solcher Stall und ein Hängewagenbahnsystem mit einem solchen Hängewagen hat den Vorteil, dass der Grundriss und der Raum des Stalls optimal genutzt werden können. Ferner hat ein schmaler Futtertisch, wie oben beschrieben, den Vorteil, dass die Kühe keine Probleme haben das Futter auf dem gesamten Futtertisch zu erreichen.

Die Erfindung ermöglicht sowohl eine gründliche Reinigung des Futtertischs, als auch des Liegebereichs der Kühe, bevor frisches Futter auf den Futtertisch bzw. frisches Einstreumaterial in den Liegebereich der Kühe gebracht wird. Daher werden erfindungsgemäß nicht nur die hygienischen Verhältnisse in einem Stall verbessert, sondern gleichzeitig kann auch die Produktivität der Tiere und damit die Milchproduktion gesteigert und der Arbeits- und Zeitaufwand für das Personal bei der Milchproduktion verringert werden. Denn die systematische Reinigung wird in sehr kurzer Zeit und auf sehr effektive Art und Weise durchgeführt, und Futter wird auf hygienische Weise in sehr kurzer Zeit ohne individuellen Arbeitsaufwand zu den Tieren gebracht. Bei einer weiteren Ausführungsform wird das noch auf dem Futtertisch vorhandene "alte" Futter nicht eingesammelt, sondern durch ein Räumschild auf dem Futtertisch von der Mitte nach außen verteilt. Diese Umverteilung ist in der gesamten vorliegenden Beschreibung und den beigefügten Patentansprüchen ebenfalls als "Reinigung eines/des Futtertischs" zu verstehen. So kann dieses Futter, das von den Tieren nicht erreicht werden konnte, weil es in der Mitte des Futtertisches lag, nun gefressen werden. Dadurch kann erreicht werden, dass ein höherer Anteil des auf den Futtertisch gebrachten Futters bzw. das gesamte auf den Futtertisch gebrachte Futter von den Tieren gefressen wird. Damit wird die Wirtschaftlichkeit des Stallbetriebs und der Milchproduktion erhöht.

Bei einer bevorzugten Ausführungsform ist der mindestens eine Hängewagen im Bereich einer entlang des Hängewagenbahnsystem verlaufenden und/oder das Hängewagenbahnsystem kreuzenden Viehtreibereinrichtung über diese bewegbar. Dadurch wird gewährleistet, dass sich die Viehtreibereinrichtung und das Hängewagenbahnsystem nicht gegenseitig stören. Damit kann das erfindungsgemäße Hängewagenbahnsystem besonders vorteilhaft auch noch nachträglich in einen bereits vorhandenen Stall eingebaut werden. Dazu wird das Schienensystem so hoch im Stall befestigt, dass der Hängewagen oder die Hängewägen nicht gegen eine Viehtreibereinrichtung stoßen, sondern über diese hinwegbewegt werden können. Besonders bevorzugt wird der Hängewagen oder werden die Hängewägen nur in dem Bereich einer entlang des Hängewagenbahnsystem verlaufenden Viehtreibereinrichtung und im Bereich einer das Hängewagenbahnsystem kreuzenden Viehtreibereinrichtung über diese bewegt. Dazu ist das Schienensystem vorteilhaft nur in diesen Bereichen so hoch angebracht, dass der mindestens eine Hängewagen oder die Hängewägen über die Viehtreibereinrichtung bewegbar ist/sind, während bei einer besonders bevorzugten Ausführungsform der mindestens eine Hängewagen oder die Hängewägen über einem Futtertisch oder nebeneinanderliegenden Liegeboxen nur in einem sehr geringen Abstand darüber hinwegbewegt werden. Damit kann die Reinigung des Futtertisches und der Liegeboxen sowie die Versorgung des Futtertischs mit Futter und die Versorgung der Liegeboxen mit Einstreumaterial einfacher bewerkstelligt werden. Bei dieser Ausführungsform weist das Schienensystem einen Höhenunterschied auf zwischen dem Bereich, in dem eine Viehtreibereinrichtung verläuft oder eine Viehtreibereinrichtung das Hängewagenbahnsystem kreuzt, und dem Bereich eines Futtertischs oder der nebeneinander angeordneten Liegeboxen.

Bei einer weiteren bevorzugten Ausführungsform wird der Hängewagen oder werden die Hängewägen überall im Stall im Wesentlichem im gleichen Abstand über den Boden bewegt. Denn so kann ein einfaches Schienensystem eingesetzt werden. Die Reinigungseinrichtung ist dann so ausgestaltet, dass sie höhenverstellbar ist, beispielsweise ein Teleskopsystem aufweist, damit es über einen größeren Abstand zwischen Hängewagen und Futtertisch und/oder Liegeboxen die Reinigungsfunktion ausführen kann.

Besonders bevorzugt wird das Schienensystem so hoch im Stall angebracht, dass der mindestens eine Hängewagen weder mit den Kühen noch dem Betriebspersonal zusammenstoßen kann, sondern über diese hinwegbewegt werden kann.

Der mindestens eine Hängewagen wird daher mindestens im Bereich der Viehtreibereinrichtung, mindestens 0,80 m bis zu 3,50 m, vorzugsweise mindestens 2,00 m, besonders bevorzugt mindestens 2,50 m über den Boden bewegt. Dadurch kann erreicht werden, dass sich nicht nur die Viehtreibereinrichtung und das Hängewagenbahnsystem nicht gegenseitig stören, sondern es können sich auch bei einem Abstand von mindestens 2,00 m, vorzugsweise mindestens 2,50 m zwischen Hängewagen und Stallboden Betriebspersonal und Kühe problemlos unter dem Hängewagenbahnsystem bewegen. Diese Abstände sind daher auch in den Bereichen, in denen das Hängewagenbahnsystem entlang eines Laufgangs für Kühe und/oder Betriebspersonal verläuft oder einen Laufgang für Kühe und/oder Betriebspersonal kreuzt besonders vorteilhaft.

Die oben genannte Viehtreibereinrichtung kann zum Beispiel als Mistschieber zur Reinigung eines Laufgangs ausgeführt sein.

Der mindestens eine Hängewagen kann bei einer vorteilhaften Ausführungsform der Erfindung in dem Schienensystem entlang der Schienen vor- und wieder zurückbewegbar, gegebenenfalls auch in Richtung des Bodens nach unten und wieder zurückbewegbar, sein. Wenn der Hängewagen in Richtung des Bodens nach unten und wieder zurück nach oben bewegbar ist, kann das Schienensystem vorteilhaft im gesamten Stall in einer Höhe angebracht werden, wobei der oben beschriebene vorteilhafte große Abstand zwischen Hängewagen und Boden von bis zu 3,50 an den Stellen im Stall eingehalten wird, an denen das Hängewagenbahnsystem entlang einer Viehtreibereinrichtung, entlang eines Laufgangs für Kühe und/oder Betriebspersonal verläuft oder die Viehtreibereinrichtung und/oder einen Laufgang für Kühe und/oder Betriebspersonal kreuzt.

Der mindestens eine Vorratsbehälter des mindestens einen Hängewagens kann eine Mischeinrichtung, vorzugsweise eine Schnecke, aufweisen. Besonders bevorzugt wird das Futter in dem Vorratsbehälter gemischt, wenn Mischfutter eingesetzt werden soll, das aus verschiedenen Vorratscontainern in den Vorratsbehälter gefüllt wird. Besonders bevorzugt erfolgt das Mischen mit einem Mischer, der außerhalb des Hängewagens vorgesehen ist, wenn große Kräfte für das Mischen erforderlich sind. Das Hängewagenbahnsystem umfasst vorzugsweise mindestens zwei Vorratscontainer, einen zur Bevorratung von Futter und einen weiteren zur Bevorratung von Einstreumaterial. Besonders bevorzugt umfasst das erfindungsgemäße Hängewagenbahnsystem mehrere Vorratscontainer für verschiedene Futtersorten, z. B. Kraftfutter, Heu, Luzerner (ein grasähnliches Produkt), Fertigfuttermischungen. Denn dann kann für verschiedene Gruppen von Tieren ein bestimmtes Futter auf die Bedürfnisse der verschiedenen Gruppen von Tieren abgestimmt automatisch vorgesehen und verfüttert werden. Die Erfindung ermöglicht somit insbesondere auch ein verbessertes Verfahren zur Fütterung. Die Bedürfnisse können insbesondere durch Leitfähigkeitsmessungen der gemolkenen Milch ermittelt werden, wie unten beschrieben. Dadurch ist eine weitere Steigerung der Milchproduktion möglich.

Die Vorratscontainer können eine Einrichtung, vorzugsweise einen Kratzboden und eine Schnecke, zur Befüllung des mindestens einen Vorratsbehälters des mindestens einen Hängewagens aufweisen. Das erfindungsgemäße Hängewagenbahnsystem hat daher den weiteren Vorteil, dass auch die Bevorratung von Futter und Einstreumaterial automatisiert werden können. Damit kann der Arbeitsaufwand weiter vorteilhaft verringert werden.

Unter einem weiteren Gesichtspunkt der vorliegenden Erfindung wird ein Verfahren bereitgestellt zur
(a) Versorgung eines Futtertisches in einem Kuhstall mit Futter,
(b) Reinigung des Futtertisches und von nebeneinander angeordneten und an einen Laufgang angrenzenden Liegeboxen für Kühe und
(c) Versorgung der Liegeboxen mit Einstreumaterial,
wobei der mindestens eine Hängewagen des oben beschriebenen Hängewagenbahnsystem über den Futtertisch und die nebeneinander angeordneten Liegeboxen bewegt wird.

Mit diesem Verfahren ist es besonders vorteilhaft möglich sowohl eine gründliche Reinigung des Futtertischs, als auch des Liegebereichs der Kühe zu erreichen, bevor frisches Futter auf den Futtertisch bzw. frisches Einstreumaterial in den Liegebereich der Kühe gebracht wird. Daher werden erfindungsgemäß nicht nur die hygienischen Verhältnisse in einem Stall verbessert, sondern gleichzeitig kann auch die Produktivität der Tiere und damit die Milchproduktion gesteigert und der Arbeits- und Zeitaufwand für das Personal bei der Milchproduktion verringert werden. Denn die systematische Reinigung wird in sehr kurzer Zeit und auf sehr effektive Art und Weise durchgeführt, und Futter wird auf hygienische Weise in sehr kurzer Zeit ohne individuellen Arbeitsaufwand zu den Tieren gebracht.

Vorzugsweise umfasst ein solches Verfahren ein Melken von Kühen nach den folgenden Schritten:
(A) ein Zusammentreiben mindestens einer ersten Gruppe von Kühen, die sich in einem der ersten Gruppe zugeordneten Liege- und Fressbereich eines Stalls aufhalten, wobei der Liegebereich Liegeboxen umfasst, über einen ersten Laufgang (30), der zwischen dem Liege- und Fressbereich angeordnet ist, auf einen zweiten Laufgang, durch eine Viehtreibereinrichtung, die von einem ersten Ende des ersten Laufgangs zu einem zweiten Ende des ersten Laufgangs bewegt wird, an dem der erste Laufgang in den zweiten Laufgang mündet,
(B) ein Hineintreiben der Gruppe von Kühen von dem zweiten Laufgang, gegebenenfalls über einen Vorwartehof, in einen Melkraum, in dem die Kühe gemolken werden;
(C) ein Reinigen des Futtertisches des der ersten Gruppe zugeordneten Fressbereichs und ein Versorgen desselben Futtertischs mit Futter;
(D) ein Reinigen des der nebeneinander angeordneten Liegeboxen des der ersten Gruppe zugeordneten Liegebereichs und ein Versorgen derselben Liegeboxen mit Einstreumaterial und
(E) ein Zurücktreiben der gemolkenen Kühe in den der ersten Gruppe zugeordneten Liege- und Fressbereich.

Besonders bevorzugt umfasst das Verfahren folgende Schritte:
(A') ein Zusammentreiben einer weiteren Gruppe von Kühen, die sich in einem der weiteren Gruppe zugeordneten weiteren Liege- und Fressbereich des Stalls aufhalten, über einen weiteren Laufgang, der zwischen dem weiteren Liege- und Fressbereich angeordnet ist, auf den zweiten Laufgang, durch eine weitere Viehtreibereinrichtung, die von einem ersten Ende des weiteren Laufgangs zu einem zweiten Ende des weiteren Laufgangs bewegt wird, an dem der weitere Laufgang in den zweiten Laufgang mündet,
(B') ein Hineintreiben der weiteren Gruppe von Kühen von dem zweiten Laufgang, gegebenenfalls über einen Vorwartehof, in einen Melkraum, in dem die Kühe gemolken werden;
(C') ein Reinigen des Futtertisches des der weiteren Gruppe zugeordneten Fressbereichs und ein Versorgen desselben Futtertischs mit Futter;
(D') ein Reinigen des der nebeneinander angeordneten Liegeboxen des der weiteren Gruppe zugeordneten Liegebereichs und ein Versorgen derselben Liegeboxen mit Einstreumaterial und
(E') ein Zurücktreiben der gemolkenen Kühe in den der weiteren Gruppe zugeordneten Liege- und Fressbereich,
vorzugsweise mit der Maßgabe, dass die Schritte (A') bis (E') für die weitere Gruppe von Kühen nach den Schritten (A) bis (E) durchgeführt werden.

Ganz besonders bevorzugt werden die Schritte (A') bis (E') mit mehreren weiteren Gruppen von Kühen durchgeführt, vorzugsweise der Art, dass die Schritte (A') bis (E') für jede weitere Gruppe von Kühen nach den Schritten (A') bis (E') für die vorhergehende Gruppe durchgeführt werden.

Die Ausgestaltungen des erfindungsgemäßen Verfahrens, in denen automatisch auch ein Melken durchgeführt wird, ermöglichen eine weitere Verringerung eines individuellen Arbeitsaufwandes. Melken, Reinigung des Liegebereichs und des Futtertischs sowie Futterzufuhr und eine Versorgung des Liegebereichs mit frischem Einstreumaterial ermöglichen eine systematische Verbesserung und Koordination der Arbeitsabläufe, die insbesondere das Wohlbefinden der Tiere und damit eine Verbesserung der Milchproduktion erhöhen.

Die bevorzugten Ausführungsformen der Erfindung haben den Vorteil, dass keine gesonderte Überwachung der Tiere und kein gesondertes Melken einzelner Tiere mehr notwendig ist. Damit wird der Zeit- und Arbeitsaufwand für das Betriebspersonal eines Stalls für Tiere bei der Milchproduktion erheblich gesenkt. Ferner werden auf vorteilhafte Weise durch das erfindungsgemäße Verfahren alle Tiere zwangsweise gleich oft gemolken. Dadurch wird vermieden, dass manche Tiere weniger oft oder gar nicht gemolken werden. Durch die mit dem erfindungsgemäßen Verfahren ermöglichte Regelmäßigkeit des Melkens kann die durchschnittliche Produktivität einer Herde pro Tier deutlich verbessert werden. Außerdem ermöglicht dieses Verfahren, dass der Liegebereich der Kühe und der Futtertisch systematisch gereinigt werden können, ohne die Kühe in einer Ruhepause, insbesondere beim Wiederkäuen, zu stören.

Vorteilhaft können Tiere entsprechend ihrer Leistungsfähigkeit bei der Milchproduktion in verschiedene Gruppen eingeteilt werden und damit leichter eine Steigerung der Leistungsfähigkeit der verschiedenen Gruppen und damit der Gesamtmilchproduktion erzielt werden.

Außerdem kann der Raum eines Stalls sehr gut genutzt werden, und die Anzahl der Tiere, die in eine Gruppe eingeteilt werden, kann so zusammengefasst werden, dass die Produktivität der Tiere verbessert wird.

Bei einer bevorzugten Ausführungsform der vorliegenden Erfindung werden durch Betätigung einer ersten oder gegebenenfalls einer weiteren ersten Treib- und Absperrvorrichtung(en) zum Heraustreiben von Kühen aus ihrem Liegebereich jeweils alle Kühe einer Gruppe, die sich in dem ihrer Gruppe zugeordneten Liegebereich aufhalten, aus diesem Liegebereich gleichzeitig in den ersten oder gegebenenfalls weiteren Laufgang getrieben, und die erste oder gegebenenfalls die weitere(n) erste(n) Treib- und Absperrvorrichtung(en) ist oder sind so ausgebildet, dass der für die jeweilige Gruppe zugeordnete Liegebereich für alle Kühe dieser Gruppe unzugänglich abgesperrt wird.

Außerdem können durch Betätigung einer zweiten und gegebenenfalls einer weiteren zweiten Treib- und Absperrvorrichtung(en) zum Heraustreiben von Kühen aus ihrem Fressbereich in den ersten oder weiteren Laufgang zwischen Liege- und Fressbereich und zum Absperren ihres Fressbereichs, alle Kühe einer Gruppe, die sich in dem ihrer Gruppe zugeordneten Fressbereich aufhalten, aus diesem Fressbereich gleichzeitig in den ersten oder gegebenenfalls weiteren Laufgang getrieben werden.

Vorzugsweise erfolgt das Treiben der ersten Gruppe von Kühen in Schritt (b) in den zweiten Laufgang durch Betätigung einer Viehtreibereinrichtung, die von einem ersten Ende des ersten Laufgangs zu einem zweiten Ende des ersten Laufgangs, an dem der zweite Laufgang angeordnet ist, hinbewegt wird.

Außerdem kann das Treiben einer weiteren Gruppe von Kühen in Schritt (b') in den zweiten Laufgang durch Betätigung einer weiteren Viehtreibereinrichtung erfolgen, die von einem ersten Ende des weiteren Laufgangs zu einem zweiten Ende des weiteren Laufgangs, an dem der zweite Laufgang angeordnet ist, hinbewegt wird.

Besonders bevorzugt ist eine Ausführungsform des erfindungsgemäßen Verfahrens, bei der die Viehtreibereinrichtung oder die weitere Viehtreibereinrichtung als Mistschieber ausgeführt ist, und somit mit der Viehtreibereinrichtung oder der weiteren Viehtreibereinrichtung Mist und andere Verunreinigungen, einschließlich von Flüssigkeiten, in dem jeweiligen Laufgang geräumt werden können.

Bei einer weiteren vorteilhaften Ausführungsform der Erfindung wird vor der Betätigung der ersten und/oder zweiten sowie gegebenenfalls der weiteren ersten und/oder weiteren zweiten Treib- und Absperrvorrichtung, der Viehtreibereinrichtung sowie gegebenenfalls der weiteren Viehtreibereinrichtung(en) und/oder vor dem Hineintreiben einer Gruppe von Kühen von dem zweiten Laufgang, gegebenenfalls über einem Vorwartehof, in den Melkraum ein akustisches Signal, vorzugsweise ein Klingel- oder Hornsignal, und/oder optisches Signal gegeben. Somit kann erreicht werden, dass die Tiere durch Gewöhnung schon mit dem akustischen und/oder optischen Signal auf das Verfahren zur Reinigung der Liegeboxen und gegebenenfalls auf ein Melken vorbereitet werden. Bei mehreren Gruppen von Tieren können für jede Gruppe unterschiedliche akustische und/oder optische Signale eingesetzt werden, an die die Tiere gewöhnt werden können. Durch Gewöhnung an ein oder mehrere verschiedene Signale können die Tiere schon nach kurzer Zeit im Wesentlichen ohne mechanische oder elektrische Stimulation gemäß dem Verfahrensablauf der Erfindung durch einen Stall getrieben werden, so dass das Verfahren zur Reinigung der Liegeboxen, Einbringung neuen Einstreumaterials, Reinigung des Futtertischs und Versorgung des Futtertischs mit Futter, gegebenenfalls einschließlich einem Verfahren zum Melken, ohne Stress für die Tiere durchgeführt werden kann, obwohl die Liegeboxen häufiger als auf die bekannte Art und Weise pro Tag gereinigt und gegebenenfalls jedes Tier häufiger gemolken wird. Durch die Vermeidung von Stress kann die Milchproduktion der Tiere zusätzlich gesteigert werden.

Bei einer weiteren Ausführungsform des Verfahrens der Erfindung wird vor dem Treiben einer Gruppe von Kühen in den zweiten Laufgang eine Absperrung zwischen dem ersten Laufgang und dem zweiten Laufgang oder zwischen dem weiteren Laufgang und dem zweiten Laufgang geöffnet.

Ferner kann nach oder während dem Treiben einer Gruppe von Kühen, gegebenenfalls über einen Vorwartehof, in den Melkraum, die Absperrung zwischen dem ersten Laufgang und dem zweiten Laufgang oder zwischen dem weiteren Laufgang und dem zweiten Laufgang geschlossen werden.

Bei einer weiteren vorteilhaften Ausführungsform der Erfindung werden die Kühe unter Erkennung jeder einzelnen Kuh gemolken, und die gemolkene Milch jeder einzelnen Kuh wird analysiert, vorzugsweise durch Messung der Leitfähigkeit der Milch. Auf diese Weise kann vorteilhaft schon frühzeitig ein trächtiges Tier oder eine Veränderung im Gesundheitszustand eines Tiers erkannt werden. Besonders bevorzugt ist daher eine Ausführungsform des Verfahrens der Erfindung, bei der ein Vorbeitreiben der gemolkenen Kühen an einer Schleuse zur Erkennung der einzelnen Kühe und gegebenenfalls zur Absonderung einer Kuh aus der Gruppe erfolgt.

Das Verfahren gemäß der Erfindung hat den Vorteil, dass der Liegebereich und auch der erste oder weitere Laufgang systematisch gereinigt werden können sowie frisches Einstreumaterial in die Liegeboxen eingebracht werden kann. Bei einer vorteilhaften Ausführungsform der vorliegenden Erfindung werden daher die Liegeboxen einer Gruppe von Kühen vor dem Zurücktreiben der gemolkenen Kühe in den dieser Gruppe zugeordneten Liege- und Fressbereich gereinigt. Besonders bevorzugt wird bei der Reinigung der Liegeboxen mit der Liegebox begonnen, die an dem Ende des ersten oder weiteren Laufgangs angeordnet ist, das in den zweiten Laufgang mündet.

Unter einem weiteren Gesichtspunkt der Erfindung wird ein Stall bereitgestellt, der das oben beschriebene Hängewagenbahnsystem umfasst. Außerdem kann der erfindungsgemäße Stall folgendes umfassen:
mindestens einen Liegebereich, der nebeneinander angeordnete Liegeboxen für mindestens eine Gruppe von Kühen umfasst,
einen Fressbereich mit Fressplätzen an einem Futtertisch für die mindestens eine Gruppe von Kühen,
einen ersten Laufgang, der zwischen dem Liege- und Fressbereich der ersten Gruppe angeordnet ist,
gegebenenfalls eine erste Treib- und Absperrvorrichtung zum Heraustreiben von Kühen aus ihrem Liegebereich in den ersten Laufgang und zum Absperren des Liegebereichs,
gegebenenfalls eine zweite Treib- und Absperrvorrichtung zum Heraustreiben von Kühen aus ihrem Fressbereich in den ersten Laufgang und zum Absperren des Fressbereichs.

Besonders bevorzugt kann der Stall der Erfindung folgendes umfassen:
einen zweiten Laufgang, in den der erste Laufgang mündet,
eine Viehtreibereinrichtung zum Treiben der auf den ersten Laufgang zusammengetriebenen ersten Gruppe von Kühen von einem ersten Ende des ersten Laufgangs zu einem zweiten Ende des ersten Laufgangs und in den zweiten Laufgang hinein, wobei die Viehtreibereinrichtung vorzugsweise von dem ersten Ende des Laufgangs zu dem zweiten Ende des Laufgangs hin- und herbewegbar ist;
gegebenenfalls einen Vorwartehof;
einen Melkraum,
gegebenenfalls eine Schleuse zur Erkennung einzelner Kühe und gegebenenfalls zur Absonderung einer Kuh aus einer Gruppe.

Bei einer bevorzugten Ausführungsform des erfindungsgemäßen Stalls sind die Vorratscontainer des Hängewagenbahnsystems im Bereich des zweiten Laufgangs angeordnet, der vorzugsweise an dem Ende des Stalls angeordnet ist, an dem der erste Laufgang in den zweiten Laufgang mündet. So besteht die Möglichkeit, dass am anderen Ende des Stalls und des ersten Laufgangs ein Durchgang für die Tiere ins Freie geschaffen werden kann. Damit kann das Wohlbefinden der Tiere weiter erhöht werden.

Der Stall kann ferner eine Steuereinrichtung zur Steuerung eines der oben beschriebenen Verfahren umfassen.

Die vorliegende Erfindung hat den weiteren Vorteil, dass mit der Reinigungseinrichtung des erfindungsgemäßen Hängewagenbahnsystems ein Stall mit sehr hohem Hygienestandard bereitgestellt werden kann, wobei kein erhöhter Raumbedarf für die Reinigungseinrichtung notwendig ist. Außerdem können eine große Anzahl an Liegeboxen in einer sehr kurzen Zeit sehr gründlich gereinigt werden. Ferner kann mit dem erfindungsgemäßen Stall der Raum sehr effizient ausgenutzt werden, da statt einer Vielzahl von Einrichtungen zum Reinigen der Liegeboxen und des Futtertischs sowie der Versorgung des Futtertischs mit Futter und Versorgung der Liegeboxen mit Einstreumaterial eine für alle diese Funktionen geeignete Einrichtung bereitgestellt wird. Der erfindungsgemäße Stall kann insbesondere nur für eine Gruppe von Kühen, die einem Liege- und Fressbereich zugeordnet ist, ausgeführt werden. Wenn die Anzahl der Tiere erhöht und der Stall erweitert werden muss, kann auf einfache Art und Weise eine oder mehrere weitere Gruppe(n) von Tieren in einem Anbau oder in mehreren weiteren Anbau an den bisherigen Stall untergebracht werden, wobei der Melkraum, der zweite Laufgang und gegebenenfalls der Vorwartehof des bisherigen Stalls weiter genutzt werden können. So kann ein Stall über einen langen Zeitraum variabel genutzt werden kann, und auch die Investitionskosten können vorteilhaft über diesen langen Zeitraum verteilt werden.

Eine Treib- und Absperrvorrichtung kann einen Auftriebsstimulator aufweisen, der einen mit Schwachstrom beaufschlagbaren Kontakt oder Draht, einen optischen oder akkustischen Signalgeber, ein Schild und/oder einen ausfahrbaren Teleskoparm umfasst.

Eine bevorzugte Treib- und Absperrvorrichtung ist zum Heraustreiben von Kühen aus nebeneinander angeordneten Liegeboxen und zum Absperren der Liegeboxen eingerichtet.

Eine weitere bevorzugte Treib- und Absperrvorrichtung ist zum Heraustreiben von Kühen aus nebeneinander angeordneten Fressplätzen und zum Absperren der Fressplätze eingerichtet.

### Kurze Figurenbeschreibung

Fig. 1 zeigt eine Draufsicht auf einen Stall, in dem das erfindungsgemäße Hängewagenbahnsystem bevorzugt eingesetzt werden kann.
Fig. 2 zeigt einen Querschnitt durch einen Teil des Stalls von Fig. 1 gemäß der Linie II-II.
Fig. 3 zeigt einen Querschnitt gemäß der Fig. 2, wobei eine Treib- und Absperrvorrichtung zum Heraustreiben einer Kuh aus ihrem Liegebereich betätigt ist.
Fig. 4 zeigt einen Querschnitt durch einen Teil des Stalls von Fig. 1 gemäß der Linie IV-IV.
Fig. 5 zeigt eine Draufsicht auf einen erfindungsgemäßen Stall, in dem das erfindungsgemäße Hängewagenbahnsystem gezeigt ist.
Fig. 6 zeigt eine Detailansicht der Fig. 5.
Fig. 7 zeigt einen Querschnitt durch einen Teil des Stalls von Fig. 5 bzw. 6.
Fig. 8 zeigt einen Querschnitt durch einen Vorratscontainer.

Die vorliegende Erfindung wird nun in weiteren Einzelheiten mit Hilfe der Figuren und anhand bevorzugter Ausführungsformen beschrieben.

In den verschiedenen Figuren sind entsprechende Bauteile, Elemente und Gegenstände mit gleichen Bezugszeichen versehen.

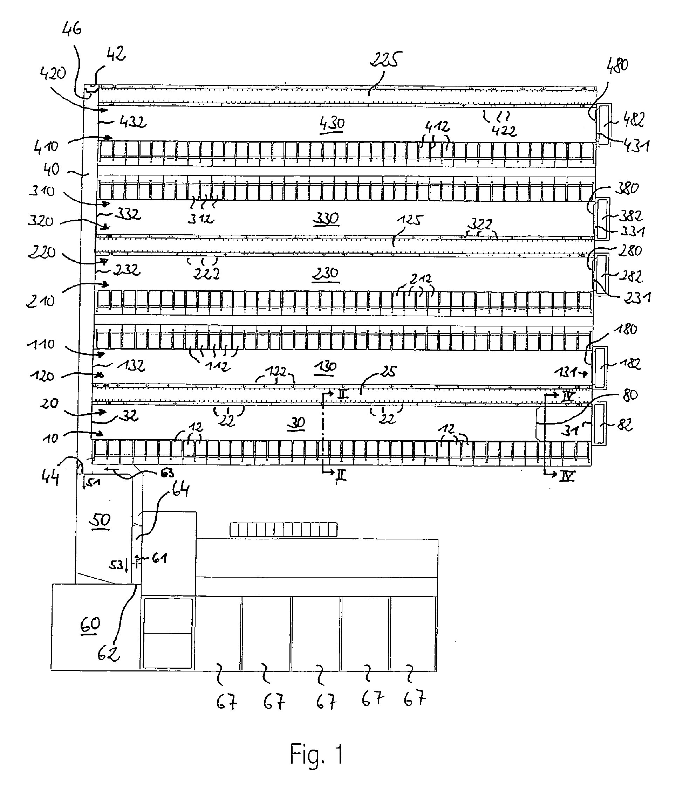

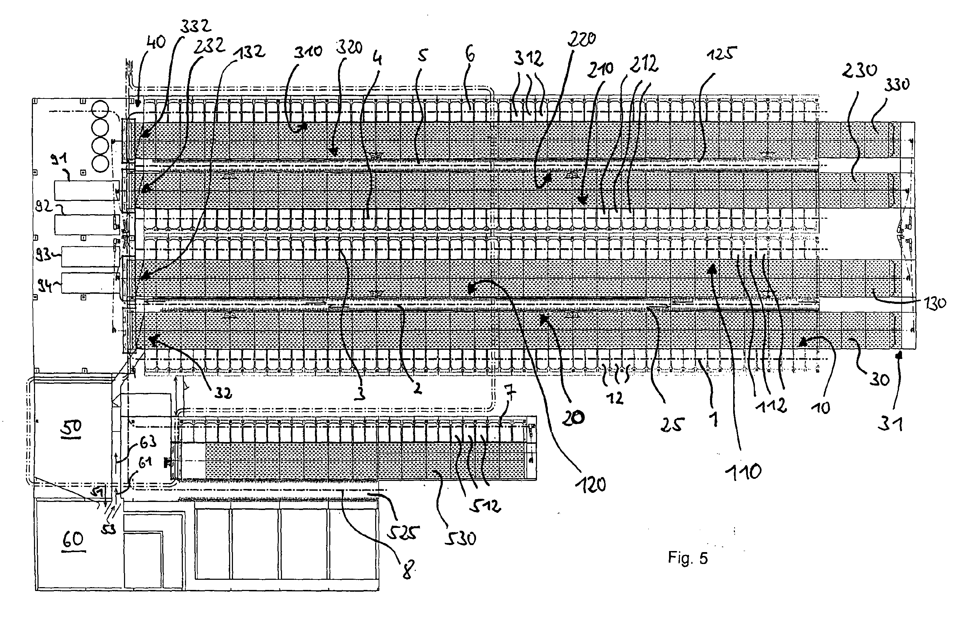

Die Fig. 1 zeigt eine Draufsicht auf einen bevorzugten Stall, in dem das erfindungsgemäße Hängewagenbahnsystem eingesetzt werden kann. Zum besseren Verständnis und zur Vereinfachung der Darstellung sind in Fig. 1 keine Kühe gezeigt. Außerdem ist auch das erfindungsgemäße Hängewagenbahnsystem nicht eingezeichnet. Dieses ist in den Figuren 5 bis 7 dargestellt. Der Stall umfasst einen Liegebereich 10, der einer ersten Gruppe von Kühen zugeordnet werden kann. Dieser Liegebereich umfasst vierzig nebeneinander liegende Liegeboxen 12, in denen sich die Kühe zum Wiederkäuen oder Ausruhen hinlegen können. Außerdem weist der Stall einen Fressbereich 20 auf, der ebenfalls der ersten Gruppe von Kühen zugeordnet ist. Der Fressbereich 20 hat ebenfalls vierzig Fressplätze 22 an einem Futtertisch 25 für die erste Gruppe von Kühen. Zwischen dem Liegebereich 10 und dem Fressbereich 20 der ersten Gruppe ist ein erster Laufgang 30 angeordnet, der an einem seiner Enden, dem Ende 32, in einen zweiten Laufgang 40 mündet. Ferner weist der Stall einen Vorwartehof 50 und einen Melkraum 60 und eine Einrichtung zum Heraustreiben der Kühe der ersten Gruppe aus ihrem Liegebereich 10 in den ersten Laufgang 30 und in den zweiten Laufgang 40 auf. Gemäß einer bevorzugten Ausführungsform weist der Stall ferner einen Liegebereich 110 auf, der einer zweiten Gruppe von Kühen zugeordnet ist. Dieser zweite Liegebereich umfasst weitere vierzig nebeneinander liegende Liegeboxen 112. Außerdem weist der Stall einen weiteren Fressbereich 120 mit vierzig Fressplätzen 122 an dem Futtertisch 25 für die zweite Gruppe von Kühen auf. Bei einer anderen Ausführungsform der Erfindung weist der zweite Fressbereich 120 einen eigenen Futtertisch auf. Um den Raum des Stalls optimal auszunutzen kann der Futtertisch 25 für zwei Gruppen von Kühen verwendet werden, wie in Fig. 1 gezeigt. Zwischen dem Liegebereich 110 und dem Fressbereich 120 der zweiten Gruppe ist ein weiterer Laufgang 130 angeordnet, der an einem seiner Enden, dem Ende 132 in den zweiten Laufgang 40 mündet. Ferner weist der Stall eine Einrichtung zum Heraustreiben der Kühe der zweiten Gruppe aus ihrem Liegebereich 110 in den weiteren Laufgang 130 und in den zweiten Laufgang 40 auf. Der in Fig. 1 gezeigte Stall weist zudem einen Liegebereich 210 auf, der einer dritten Gruppe von Kühen zugeordnet ist. Dieser dritte Liegebereich umfasst weitere vierzig nebeneinander liegende Liegeboxen 212. Außerdem weist der Stall einen weiteren Fressbereich 220 mit weiteren vierzig Fressplätzen 222 an dem Futtertisch 125 für die dritte Gruppe von Kühen auf. Zwischen dem Liegebereich 210 und dem Fressbereich 220 der dritten Gruppe ist ein weiterer Laufgang 230 angeordnet, der an einem seiner Enden, dem Ende 232 in den zweiten Laufgang 40 mündet. Ferner weist der Stall eine Einrichtung zum Heraustreiben der Kühe der dritten Gruppe aus ihrem Liegebereich 210 in den weiteren Laufgang 230 und in den zweiten Laufgang 40 auf. Weiterhin ist in dem Stall ein Liegebereich 310 zu sehen, der einer vierten Gruppe von Kühen zugeordnet ist. Dieser vierte Liegebereich umfasst nebeneinander liegende Liegeboxen 312. Außerdem weist der Stall einen weiteren Fressbereich 320 mit Fressplätzen 322 an dem Futtertisch 125 für die vierte Gruppe von Kühen auf. Bei einer anderen Ausführungsform der Erfindung weist der vierte Fressbereich 320 einen eigenen Futtertisch auf. Um den Raum des Stalls optimal auszunutzen kann der Futtertisch 125 aber für die dritte und vierte Gruppe von Kühen verwendet werden, wie in Fig. 1 gezeigt ist. Zwischen dem Liegebereich 310 und dem Fressbereich 320 der vierten Gruppe ist ein weiterer Laufgang 330 angeordnet, der an einem seiner Enden, dem Ende 332 in den zweiten Laufgang 40 mündet. Ferner weist der Stall eine Einrichtung zum Heraustreiben der Kühe der vierten Gruppe aus ihrem Liegebereich 310 in den weiteren Laufgang 330 und in den zweiten Laufgang 40 auf. Ferner weist der Stall einen Liegebereich 410 auf, der einer fünften Gruppe von Kühen zugeordnet ist. Dieser fünfte Liegebereich umfasst vierzig weitere nebeneinander liegende Liegeboxen 412. Außerdem weist der Stall einen weiteren Fressbereich 420 mit vierzig weiteren Fressplätzen 422 an dem Futtertisch 225 für die fünfte Gruppe von Kühen auf. Zwischen dem Liegebereich 410 und dem Fressbereich 420 der fünften Gruppe ist ein weiterer Laufgang 430 angeordnet, der an einem seiner Enden, dem Ende 432, in den zweiten Laufgang 40 mündet. Ferner weist der Stall eine Einrichtung zum Heraustreiben der Kühe der fünften Gruppe aus ihrem Liegebereich 410 in den weiteren Laufgang 430 und in den zweiten Laufgang 40 auf.

Die Anzahl der Kühe, die einer Gruppe zugeordnet wird, ist nicht auf vierzig beschränkt. Der Stall kann vielmehr sehr variabel an alle möglichen Begrenzungen, die auf einem Bauernhof für einen Stall bestehen angepasst werden. Vorzugsweise weist der einer Gruppe von Kühen zugeordnete Liegebereich eine Liegebox pro Kuh der Gruppe auf. Dies hat den Vorteil, dass sich gegebenenfalls alle Kühe einer Gruppe zwischen zwei Melkvorgängen hinlegen können. Denn eine lange Liegezeit führt zu intensivem Wiederkäuen, hoher Speichelsekretion, stabilem Pansenmilieu, effizienter Verwertung des Futters, hoher Blutzirkulation durch das Euter und somit zu einer optimalen Milchsynthese und somit zu einer hohen Milchproduktion. Außerdem beugt ein langes Liegen bei den Kühen subklinischen Pansenazidosen und Klauenrehe (Laminitis) vor. Ferner werden die Klauen sowie der Bandapparat und die Gelenke der Kühe entlastet. So wird das Wohlbefinden und die Gesundheit der Kühe und somit die Leistungsfähigkeit der Kühe für die Milchproduktion verbessert.

Für eine optimale Milchproduktion ist die Futteraufnahme zwar ebenfalls ein wesentlicher Faktor, doch muss die Anzahl der Fressplätze nicht der Anzahl der Liegeboxen einer Gruppe von Kühen entsprechen, da die Kühe üblicherweise längere Zeit liegen und dabei wiederkäuen oder ausruhen als sie Zeit damit verbringen zu fressen. So ist in der Regel eine Anzahl von Fressplätzen in der Höhe von etwa 75% der Anzahl der Liegeboxen oder Kühe, die in einer Gruppe zusammengefasst werden, ausreichend. Der auf diese Weise verbleibende Platz in einem Fressbereich, der nicht für Fressplätze genutzt wird, kann für eine oder mehrere Tränken pro Fressbereich einer Gruppe von Kühen genutzt werden. Bei einer weiteren Ausführungsform werden Fressplätze vorgesehen, die eine geringere Breite aufweisen als die Liegeboxen. Zum Beispiel sind Fressplätze mit einer Breite von etwa 75-85 cm und Liegeboxen mit einer Breite von 120-130 cm ausreichend. So kann auch Platz für eine oder mehrere Tränken gewonnen werden, wobei die Anzahl der Fressplätze der Anzahl der Liegeboxen entspricht. Dies hat den Vorteil, dass ein Liege- und Fressbereich bereitgestellt werden kann, der für jede Kuh, die diesem Liege- und Fressbereich zugeordnet wird einen Liege- und Fressplatz vorsieht. Vorteilhafterweise ist (sind) die Tränke(n) zur Wasseraufnahme für mehrere Tiere eingerichtet, insbesondere bei Kühen, da eine Kuh als Herdentier bevorzugt in Gesellschaft Wasser zu sich nimmt. Eine ausreichende Wasseraufnahme ist ebenfalls ein wichtiger Faktor für eine hohe Milchproduktion. Bei einer besonders bevorzugten Ausführungsform der Erfindung weist der Stall einen zusätzlichen Tränkenbereich, gegebenenfalls in einem zusätzlichen (nicht gezeigten) Tränkenraum, auf, in den die Tiere nach einem Melken und vor einem Zurücktreiben in den der Gruppe zugeordneten Liege- und Fressbereich geleitet oder getrieben werden. Auf diese Weise können die Kühe zu einer optimalen Wasseraufnahme gebracht werden. Eine hohe Wasseraufnahme unmittelbar nach dem Melken ist vorteilhaft, da sich gezeigt hat, dass eine Wasseraufnahme unmittelbar nach dem Melken, zu einer Steigerung der Milchproduktion führt. Gemäß dieser bevorzugten Ausführungsform kann eine Gewöhnung aller Tiere einer Gruppe an eine optimierte Wasseraufnahme erreicht werden, womit eine verbesserte Gesamtmilchproduktion erzielt werden kann. Vorzugsweise sollen die Tiere mehr als 30% ihres täglichen Wasserbedarfs unmittelbar nach dem Melken aufnehmen. Gemäß der Ausführungsform der Erfindung, bei der die Kühe unmittelbar nach dem Melken in einen Tränkenbereich geleitet oder geführt werden, kann die Wasseraufnahme unmittelbar nach einem Melken in der Höhe von mehr als 30% des täglichen Wasserbedarfs leicht antrainiert werden.

Bei einer bevorzugten Ausführungsform des Stalls der Erfindung umfasst der Stall eine Einrichtung zum Heraustreiben von Kühen aus ihrem Liegebereich in den ersten Laufgang 30 oder weiteren Laufgang 130, 230, 230, 330 oder 430 und in den zweiten Laufgang 40. Diese Einrichtung umfasst vorzugsweise eine Treib- und Absperrvorrichtung zum Heraustreiben von Kühen aus ihren Liegeboxen 12, 112, 212, 312 oder 412 in einen an die Liegeboxen angrenzenden Laufgang 30, 130, 230, 230, 330 oder 430 und zum Absperren der Liegeboxen, so dass diese für die herausgetriebenen Kühe nicht mehr zugänglich sind. Diese Treib- und Absperrvorrichtung umfasst einen in jede Liegebox hinein bewegbaren Auftriebsstimulator, der zum Heraustreiben einer Kuh aus ihrer Liegebox in diese hinein bewegt wird und zum Absperren dort drinnen belassen werden kann.

An dem Ende 32 des ersten Laufgangs 30, an dem der erste Laufgang in den zweiten Laufgang 40 mündet, ist vorzugsweise eine Absperrung oder ein Tor vorgesehen, damit die Kühe, die dem ersten Liege- und Fressbereich 10, 20 zugeordnet sind, diesen nicht verlassen können, wenn die Tiere gerade nicht gemolken werden sollen und sich in dem Liege- und Fressbereich aufhalten. Ferner dient eine solche Absperrung oder Tor dazu, dass kein Tier einer anderen Gruppe in den Liege- und Fressbereich 10, 20 der ersten Gruppe eindringen kann. An den jeweiligen Enden 132, 232, 332, 432 der Laufgänge 130, 230, 330, 430, an denen diese Laufgänge in den zweiten Laufgang 40 münden, kann jeweils eine entsprechende Absperrung oder ein Tor vorgesehen sein, damit die Kühe, die den jeweiligen weiteren ersten Liege- und Fressbereichen 110,120; 210, 220; 310, 320; 410, 420 zugeordnet sind, diese nicht verlassen können, wenn die Tiere gerade nicht gemolken werden sollen und sich in dem Liege- und Fressbereich aufhalten. Ferner dient eine solche Absperrung oder Tor dazu, dass kein Tier einer anderen Gruppe in den Liege- und Fressbereich der jeweiligen weiteren Gruppe kann.

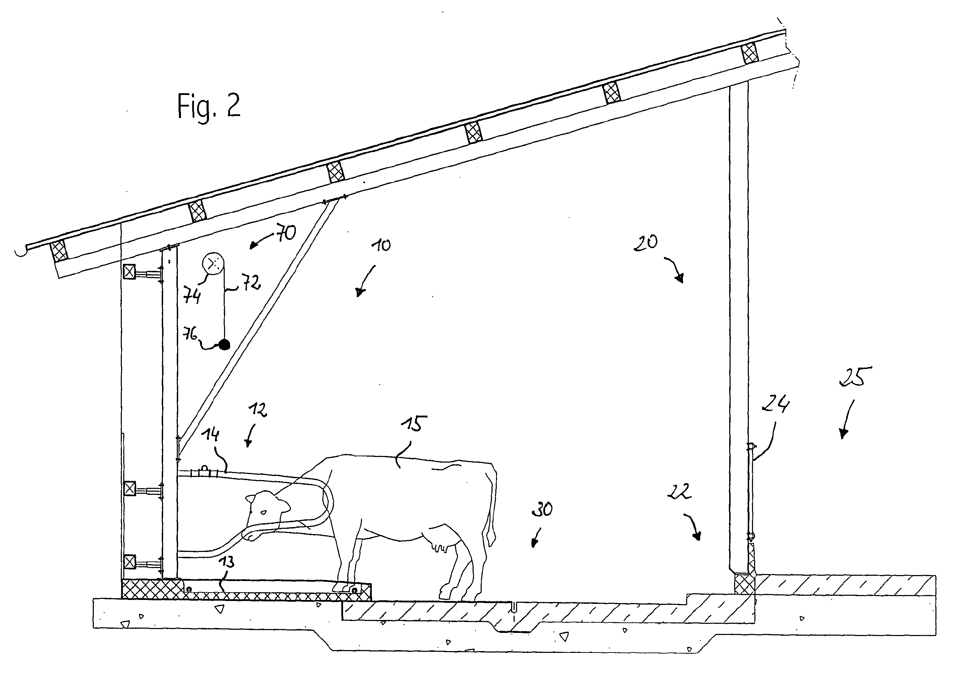

In Fig. 2 ist ein Teil des Stalls von Fig. 1 als Querschnitt gemäß der Linie II-II gezeigt. Eine Kuh 15, die in dem ihrer Gruppe zugeordneten Liege- und Fressbereich 10 und 20 frei umher laufen kann, betritt dabei gerade die Liegebox 12 mit der Liegefläche 13. Die Liegebox ist von den benachbarten Liegeboxen jeweils über einen Bügel 14 abgetrennt. Dem Liegebereich 10 gegenüber ist der Fressbereich 20 angeordnet, der die Fressplätze 22 und den Futtertisch 25 umfasst. Der Futtertisch 25 ist gemäß einer bevorzugten Ausführungsform durch ein Selbstfanggitter 24, wie es zum Beispiel in den Patenten DE 198 42 412 und DE 101 16 559 von Hartmann offenbart ist, von dem Fressplatz 22 aus für die Kuh 15 erreichbar. Besonders bevorzugt kann ein automatisch verriegelbares Selbstfang- oder Fressgitter eingesetzt werden. Somit kann vor dem Heraustreiben einer Gruppe aus ihrem Liege- und Fressbereich in den zweiten Laufgang der Futtertisch für die Futteraufnahme gesperrt werden. Diese Ausführungsform ist besonders vorteilhaft, wenn ein Futtertisch für zwei Gruppen von Tieren vorgesehen ist, wie z. B. bei Futtertisch 25 und 125. Somit kann durch entsprechende Steuerung von besonders bevorzugten steuerbaren Selbstfang- oder Fressgittern vermieden werden, dass die Tiere einer Gruppe einer anderen Gruppe, die Zugang zu dem gleichen Futtertisch hat, das Futter wegnimmt. Der Futtertisch wird mit dem erfindungsgemäßen Hängebahnsystem gereinigt und mit Futter versorgt. Besonders bevorzugt ist das Hängebahnsystem so eingerichtet und steuerbar, dass Futter automatisch, vorzugsweise bestimmte Mengen an Futter zu vorbestimmtem Zeitpunkten, nachgeliefert und/oder Futter oder Futterreste wieder entfernt werden können bzw. von der Mitte des Futtertisches an den Rand geschoben werden können, sodass die Tiere auch dieses Futter erreichen und fressen können. Besonders bevorzugt erfolgt eine Reinigung eines Futtertischs, insbesondere ein Entfernen von Futter oder Futterresten, vor dem Heraustreiben von Tieren aus ihren Liegeboxen, so dass die Tiere keine Veranlassung haben sich in dem Futterbereich aufzuhalten. Anschließend kann ein Selbstfang- oder Fressgitter gesperrt werden, sodass die Tiere keinen Zugang mehr zu dem Futtertisch haben. Bei einer besonders vorteilhaften Ausführungsform der Erfindung ist ein Futtertisch, der zwei Gruppen von Tieren zugeordnet ist, wie z. B. Futtertisch 25 und 125, geteilt, insbesondere zweigeteilt, so dass ein Teil des geteilten Futtertisches nur für die eine der zwei Gruppen von Tieren zugänglich ist, und der andere Teil des geteilten Futtertisches nur für die andere der zwei Gruppen zugänglich ist. Dies kann zum Beispiel durch entsprechende Absperrungen und/oder Fressgitter oder Selbstfanggitter erreicht werden. Die oben beschriebene Treib- und Absperrvorrichtung zum Heraustreiben von Kühen aus ihren Liegeboxen 12, 112, 212, 312 oder 412 in einen an die Liegeboxen angrenzenden Laufgang 30, 130, 230, 230, 330 oder 430 und zum Absperren der Liegeboxen, so dass diese für die herausgetriebenen Kühe nicht mehr zugänglich sind, umfasst gemäß der in Fig. 2 gezeigten Ausführungsform 70 einen Auftriebsstimulator 76, der über ein Seil oder einen Draht 72 an dessen Ende er befestigt ist, über die Rolle 74 in die Liegebox 12 hinein bewegt werden kann. Die Treib- und Absperrvorrichtung gemäß der Erfindung umfasst somit in jede Liegebox hinein bewegbare Auftriebsstimulatoren, die zum Heraustreiben einer Kuh aus ihrer Liegebox in diese hinein bewegt und zum Absperren der Liegebox dort drinnen belassen werden können. Besonders bevorzugt ist für jede Liegebox mindestens ein Auftriebsstimulator vorgesehen. Zum Absperren einer Liegebox 12 kann der Auftriebsstimulator 76 in der Liegebox 12 belassen werden. Gemäß Fig. 2 befindet sich der Auftriebsstimulator 76 noch weit oberhalb der Liegebox 12, so dass die Kuh 15 unbehindert die Liegebox 12 betreten kann.

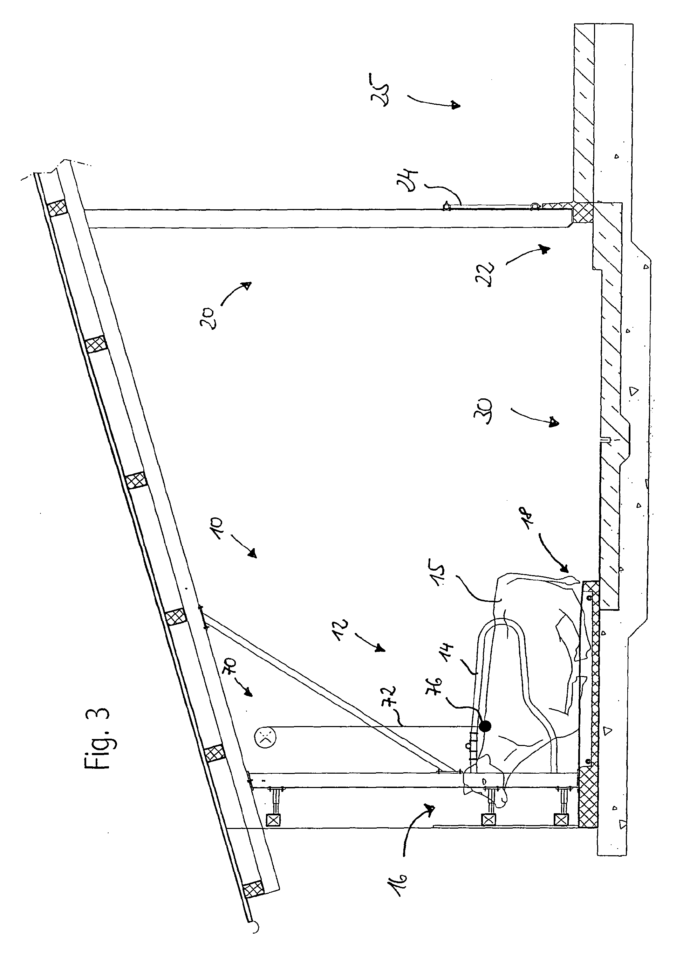

In Fig. 3 ist der Teilquerschnitt gemäß Fig. 2 gezeigt, wobei die Kuh 15 zum Wiederkäuen oder Ausruhen in der Liegebox 12 auf der Liegefläche 13 liegt. Zum Auf- und Heraustreiben der Kuh 15 aus der Liegebox 12 ist die Treib- und Absperrvorrichtung 70 betätigt. Dabei ist der Auftriebsstimulator 76, der an einem Ende des Seils oder Drahts 72 befestigt ist, über die Rolle 74 auf die Kuh herunter gelassen. Je nach Art des Auftriebsstimulators 76 kann die Position der Rolle 74 oberhalb der Liegebox gewählt werden, so dass der Auftriebsstimulator 76 die Kuh 15 nach einem Herablassen des Auftriebsstimulators an einer gewünschten Stelle kontaktiert. Bei einer weiteren bevorzugten Ausführungsform werden mehr als ein Auftriebsstimulator in die Liegebox 12 hinein bewegt.

Bei einer weiteren Ausführungsform der Erfindung umfasst eine Treib- und Absperrvorrichtung
(i) einen quer zu den Abtrennungen 14 verlaufenden und sich über die gesamte Breite der nebeneinander angeordneten Liegeboxen 12 erstreckenden Querträger, und
(ii) an dem Querträger befestigte und sich in die Liegeboxen hinein bewegbare Auftriebsstimulatoren,
wobei der Querträger und/oder die Auftriebsstimulatoren von den Kopfenden 16 der Liegeboxen 12 zu den an dem Laufgang 30 angrenzenden Enden 18 der Liegeboxen bewegbar sind.

Als Auftriebsstimulator ist zum Beispiel ein mit Schwachstrom beaufschlagbarer Kontakt oder Draht, ein optischer oder akustischer Signalgeber, ein Schild, ein ausfahrbarer Teleskoparm oder eine Kombination aus mindestens zwei der genannten Stimulatoren geeignet.

Der Stall gemäß der Erfindung umfasst ein Hängewagenbahnsystem nach einem der Ansprüche 1 bis 10. Gemäß einer bevorzugten Ausführungsform kann er folgendes umfassen:
mindestens einen Liegebereich 10, der nebeneinander angeordnete Liegeboxen 12 für mindestens eine Gruppe von Kühen umfasst,
einen Fressbereich 20 mit Fressplätzen 22 für die mindestens eine Gruppe von Kühen,
einen ersten Laufgang 30 der zwischen dem Liege- und Fressbereich der ersten Gruppe angeordnet ist,
gegebenenfalls eine erste Treib- und Absperrvorrichtung 70 zum Heraustreiben von Kühen aus ihrem Liegebereich 10 in den ersten Laufgang 30 und zum Absperren des Liegebereichs und
gegebenenfalls eine zweite Treib- und Absperrvorrichtung zum Heraustreiben von Kühen aus ihrem Fressbereich 20 in den ersten Laufgang 30 und zum Absperren des Fressbereichs 20.

Weiterhin umfasst eine bevorzugte Ausführungsform des Stalls:
einen zweiten Laufgang 40, in den der erste Laufgang 30 mündet,
eine Viehtreibereinrichtung 80 zum Treiben der auf den ersten Laufgang 30 zusammengetriebenen ersten Gruppe von Kühen von einem ersten Ende 31 des ersten Laufgangs zu einem zweiten Ende 32 des ersten Laufgangs 30 und in den zweiten Laufgang hinein;
gegebenenfalls einen Vorwartehof 50;
einen Melkraum 60,
gegebenenfalls eine Schleuse zur Erkennung einzelner Kühe und gegebenenfalls zur Absonderung einer Kuh aus einer Gruppe.

Eine besonders bevorzugte Ausführungsform des erfindungsgemäßen Stalls umfasst:
die erste Treib- und Absperrvorrichtung 70 zum Heraustreiben von Kühen aus ihrem Liegebereich 10 in den ersten Laufgang 30 und zum Absperren des Liegebereichs 10 und/oder
eine zweite Treib- und Absperrvorrichtung (nicht gezeigt) zum Heraustreiben von Kühen aus ihrem Fressbereich 20 in den ersten Laufgang 30 und zum Absperren des Fressbereichs 20. Die zweite Treib- und Absperrvorrichtung zum Heraustreiben von Kühen aus ihrem Fressbereich 20 in den ersten Laufgang 30 und zum Absperren des Fressbereichs 20 kann wie die oben beschriebene, insbesondere die in Fig. 2 und 3 gezeigte, Treib- und Absperrvorrichtung 70 ausgebildet sein.

Bei mehreren Gruppen von Kühen, die weiteren Liege- und Fressbereichen zugeordnet sein können, kann der erfindungsgemäße Stall in entsprechender Weise eine oder mehrere weitere erste Treib- und Absperrvorrichtung(en) zum Heraustreiben von Kühen aus ihrem/ihren Liegebereich(en) 110, 210, 310, 410 in den/die weiteren Laufgang/Laufgänge 130, 230, 330, 430 und zum Absperren des/der Liegebereichs/Liegebereiche 110, 210, 310, 410 und/oder eine oder mehrere weitere zweite Treib- und Absperrvorrichtung(en) zum Heraustreiben von Kühen aus ihrem/ihren Fressbereich(en) 120, 220, 320, 420 in den/die weiteren Laufgang/Laufgänge 130, 230, 330, 430 und zum Absperren des Fressbereichs/der Fressbereiche 120, 220, 320, 420 umfassen.

Ferner kann eine Ausführungsform der Einrichtung zum Heraustreiben von Kühen aus ihrem Liegebereich in den ersten 30 bzw. weiteren Laufgang 130, 230, 230, 330, 430 und in den zweiten Laufgang 40 eine Viehtreibereinrichtung 80 aufweisen, die eingerichtet ist zum Treiben der auf den ersten Laufgang 30 zusammengetriebenen ersten Gruppe von Kühen von einem ersten Ende 31 des ersten Laufgangs 30 zu einem zweiten Ende 32 des ersten Laufgangs 30 und in den zweiten Laufgang 40 hinein und gegebenenfalls eine oder mehrere weitere Viehtreibereinrichtung(en) 180, 280, 380, 480 zum Treiben der auf den weiteren Laufgang 130, 230, 330, 430 zusammengetriebenen weiteren Gruppe(n) von Kühen von dem jeweiligen ersten Ende 131, 231, 331, 431 der weiteren Laufgänge 130, 230, 330, 430 zu dem jeweiligen zweiten Ende 132, 232, 332, 432 der weiteren Laufgänge 130, 230, 330, 430 und in den zweiten Laufgang 40 hinein.

Wenn die Viehtreibereinrichtungen 80, 180, 280, 380, 480 gemäß der Fig. 1 von rechts nach links bewegt werden, treiben sie die Kühe einer Gruppe von Tieren, die jeweils auf die Laufgänge 30, 130, 230, 330, 430 getriebenen sind von den jeweiligen ersten Enden 31, 131, 231, 331, 431 auf der rechten Seite in Fig. 1 der jeweiligen Laufgänge zu den jeweiligen zweiten Enden 32, 132, 232, 332, 432 der jeweiligen Laufgänge auf der linken Seite in Fig. 1 und dann in den zweiten Laufgang 40 hinein, wenn die gegebenenfalls vorhandenen Absperrungen oder Tore dort geöffnet sind. Die Viehtreibereinrichtungen 80, 180, 280, 380, 480 gemäß der Erfindung können mit einem Seilzug- oder Schubstangensystem von dem jeweiligen einen Ende 31, 131, 231, 331, 431 des jeweiligen Laufgangs zu dem jeweiligen anderen Ende 32, 132, 232, 332, 432 hin- und herbewegt werden. Gemäß einer weiteren bevorzugten Ausführungsform der Erfindung besitzen die Viehtreibereinrichtungen einen eigenen Antrieb oder sind als Hängewagen des erfindungsgemäßen Hängewagenbahnsystem ausgeführt. Der mindestens eine Hängewagen des erfindungsgemäßen Hängewagenbahnsystems kann daher besonders bevorzugt auch zusätzlich als Viehtreibereinrichtung eingesetzt werden. Die Ausführungsformen, die gemäß Fig. 1 als Mistschieber ausgeführt sind, haben den Vorteil, dass auf diese Weise der Laufgang oder die Laufgänge gereinigt werden können.

Die Viehtreibereinrichtung 80 befindet sich in Fig. 1 zum Beispiel gerade auf dem Weg von rechts nach links und treibt alle Kühe der ersten Gruppe, die auf den ersten Laufgang getrieben sind, zu dem zweiten Ende 32 des ersten Laufgangs 30, der dort in den zweiten Laufgang 40 mündet. Sofern das zweite Ende 32 des ersten Laufgangs nicht verschlossen ist, werden alle Kühe der ersten Gruppe in den zweiten Laufgang 40 getrieben. Vorzugsweise kann eine Viehtreibereinrichtung 80, 180, 280, 380, 480 nur dann von dem jeweiligen einen Ende 31, 131, 231, 331, 431 des jeweiligen Laufgangs zu dem jeweiligen anderen Ende 32, 132, 232, 332, 432 hinbewegt werden, wenn das Ende 32, 132, 232, 332, 432 an dem der zweite Laufgang 40 angeordnet ist nicht abgesperrt oder verriegelt ist, so dass Verletzungen der Tiere durch die Viehtreibereinrichtung vermieden werden. Besonders bevorzugt kann nur eine von den Viehtreibereinrichtungen 80, 180, 280, 380, 480 zu einem gegebenen Zeitpunkt von dem jeweiligen rechten Ende zu dem jeweiligen linken Ende der Laufgänge gemäß Fig. 1 bewegt werden.

In dem zweiten Laufgang 40 kann vorzugsweise in dem Bereich des linken Endes 32 des ersten Laufgangs 30 eine Absperrung vorgesehen sein, so dass die erste Gruppe von Kühen unmittelbar in den Vorwartehof 50 getrieben wird. Bei einer besonders bevorzugten Ausführungsform kann die Absperrung, die das zweite Ende 32 des ersten Laufgangs gegenüber dem zweiten Laufgang absperrt, wenn sich die erste Gruppe von Kühen, die dem ersten Liege- und Fressbereich zugeordnet ist, in diesem Liege- und Fressbereich befindet, auch dazu verwendet werden um den zweiten Laufgang 40 so abzusperren, dass die erste Gruppe von Kühen im Wesentlichen unmittelbar in den Vorwartehof 50 getrieben wird. Die Gruppe von Kühen kann aber auch erst vollständig in den zweiten Laufgang 40 getrieben werden und von dort mit einer weiteren Viehtreibereinrichtung 46, die von dem in Fig. 1 oben gezeigten Ende 42 des zweiten Laufgangs 40 über das in Fig. 1 unten gezeigte Ende 44 des zweiten Laufgangs 40 in den Vorwartehof 50, der an dem Ende 44 angeordnet ist, getrieben werden. Die anderen zweiten Enden der weiteren Laufgänge 32, 132, 232, 332, 432 der jeweiligen weiteren Laufgänge auf der linken Seite in Fig. 1 sind dabei vorzugsweise geschlossen, so dass die Tiere einer Gruppe nicht in den Liege- und Fressbereich einer anderen Gruppe eindringen können.

Der Vorwartehof 50 ist in einer bevorzugten Ausführungsform der Erfindung vorgesehen. Der erfindungsgemäße Stall kann aber auch so ausgelegt sein, dass die Kühe, wenn sie zum Melken getrieben werden, von dem zweiten Laufgang unmittelbar in einen Melkraum getrieben werden. Der Vorwartehof und/oder der Melkraum umfassen vorzugsweise die in einem Vorwartehof und Melkraum im Stand der Technik bekannten Viehtreibereinrichtungen. Somit kann ein vollautomatisches Verfahren zum Melken und ein vollautomatischer Stall bereitgestellt werden. Der Melkraum in dem erfindungsgemäßen Stall umfasst außerdem vorzugsweise einen im Stand der Technik bekannten Melkstand, Karussellmelkstand oder Melkroboter. Als Melkstand ist ein Fischgrätenmelkstand, Side-by-Side Melkstand oder Tandemmelkstand bevorzugt. Als Karussellmelkstand kann ein Tandemkarussell, Fischgrätkarussell oder Radialkarussell eingesetzt werden. Bei einer bevorzugten Ausführungsform kann die Einrichtung zum Melken der Kühe jede einzelne Kuh erkennen, die gemolken wird. Ferner umfasst jede Einrichtung zum Melken einen Analysator mit dem die gemolkene Milch jeder einzelnen Kuh analysiert wird, vorzugsweise durch Messung der Leitfähigkeit der Milch. So kann der Gesundheitszustand jeder einzelnen Kuh vorteilhaft überwacht und Krankheiten der Kühe frühzeitig erkannt werden, so dass manche Krankheiten frühzeitig behandelt werden können und eine Ausbreitung davon auf die Gruppe der Kühe oder sogar alle in dem Stall untergebrachten Tiere vermieden werden kann. Ferner kann erkannt werden ob ein Tier trächtig ist. Außerdem kann so eine vorteilhafte Qualitätsanalyse der abgegebenen Milch erfolgen. Nach dem Melken der Kühe in dem Melkraum 60, können die Kühe über den Ausgang 62 in eine Schleuse 64 getrieben werden zur Erkennung jeder einzelnen Kuh. Gegebenenfalls kann durch die Schleuse 64 eine Kuh aus einer Gruppe abgesondert werden, wenn die Analyse der gemolkenen Milch eine Aussonderung der Kuh erforderlich macht, beispielsweise wegen des Gesundheitszustands der Kuh. Besonders vorteilhaft werden die Kühe gemäß den Pfeilen 51, 53, 61 und 63 durch den Vorwartehof, den Melkraum, die Schleuse und wieder zurück in den zweiten Laufgang getrieben.

Die Viehtreibereinrichtungen 46, 80, 180, 280, 380 und 480 in Fig. 1 sind gemäß einer bevorzugten Ausführungsform jeweils als Mistschieber ausgeführt, die jeweils von einem Ende 31, 42, 131, 231, 331, 431 der Laufgänge 30, 40, 130, 230, 330, 430 zu dem jeweiligen anderen Ende 32, 44, 132, 232, 332, 432 der Laufgänge hin- und herbewegt werden können. Dies hat den Vorteil, dass mit Hilfe der Viehtreibereinrichtungen 46, 80, 180, 280, 380 und 480 auch die Laufgänge 30, 40, 130, 230, 330, 430 gereinigt werden können, insbesondere von den Exkrementen der Kühe. Zur Beseitigung von Verunreinigungen werden diese in die an den ersten Enden 31, 42, 131, 231, 331, 431 vorgesehenen Misteinwürfe 82, 182, 282, 382, 482 (bei Laufgang 40 am Ende 42 nicht gezeigt) hinein geschoben, wenn die als Mistschieber ausgestalteten Viehtreibereinrichtungen 80, 180, 280, 380, 480 gemäß der Fig. 1 von links nach rechts bewegt werden bzw. die Viehtreibereinrichtung 46 gemäß der Fig. 1 von dem Ende 44 zu dem Ende 42 bewegt wird.

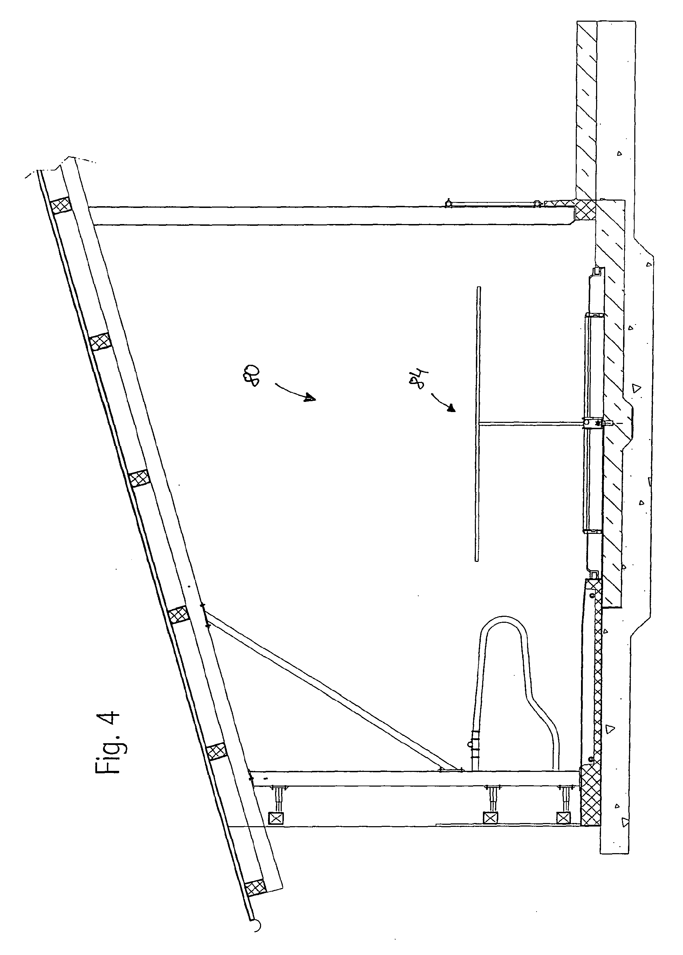

Bei einer besonders vorteilhaften Ausführungsform der Erfindung umfasst eine Viehtreibereinrichtung einen Aufbau 84 auf, wie er in Fig. 4 zu sehen ist. Der Aufbau 84 kann zum Beispiel ein einfaches Rohrgestänge sein und besonders bevorzugt vollständig oder teilweise mit Schwachstrom beaufschlagt werden, um die Kühe von dem ersten Laufgang 30 oder von einem der weiteren Laufgänge 130, 230, 330, 430 in den zweiten Laufgang 40 zu treiben. Die Viehtreibereinrichtung kann dabei während der gesamten Bewegung der Viehtreibereinrichtung von rechts nach links gemäß Fig. 1 oder auch nur in Intervallen während dieser Bewegung mit Strom beaufschlagt werden.

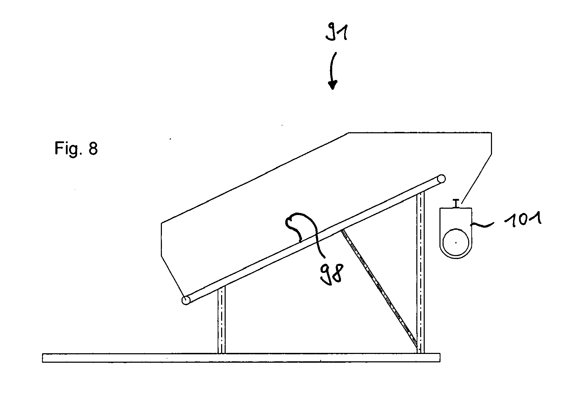

Die Fig. 5 zeigt eine Draufsicht auf einen erfindungsgemäßen Stall. Zum besseren Verständnis und zur Vereinfachung der Darstellung sind in Fig. 5 keine Kühe gezeigt. Der Stall umfasst einen Liegebereich 10, der einer ersten Gruppe von Kühen zugeordnet werden kann. Dieser Liegebereich umfasst 55 nebeneinander liegende Liegeboxen 12, in denen sich die Kühe zum Wiederkäuen oder Ausruhen hinlegen können. Außerdem weist der Stall einen Fressbereich 20 auf, der ebenfalls der ersten Gruppe von Kühen zugeordnet ist. Der Fressbereich 20 kann bis zu 55 Fressplätze an einem Futtertisch 25 für die erste Gruppe von Kühen aufweisen. Zwischen dem Liegebereich 10 und dem Fressbereich 20 der ersten Gruppe ist ein erster Laufgang 30 angeordnet, der an einem seiner Enden, dem Ende 32, in einen zweiten Laufgang 40 mündet. Ferner weist der Stall einen Vorwartehof 50 und einen Melkraum 60 und eine Einrichtung zum Heraustreiben der Kühe der ersten Gruppe aus ihrem Liegebereich 10 in den ersten Laufgang 30 und in den zweiten Laufgang 40 auf. Gemäß einer bevorzugten Ausführungsform weist der Stall ferner einen Liegebereich 110 auf, der einer zweiten Gruppe von Kühen zugeordnet ist. Dieser zweite Liegebereich umfasst weitere 55 nebeneinander liegende Liegeboxen 112. Außerdem weist der Stall einen weiteren Fressbereich 120 mit bis zu 55 Fressplätzen an dem Futtertisch 25 für die zweite Gruppe von Kühen auf. Bei einer anderen Ausführungsform der Erfindung weist der zweite Fressbereich 120 einen eigenen Futtertisch auf. Um den Raum des Stalls optimal auszunutzen kann der Futtertisch 25 für zwei Gruppen von Kühen verwendet werden, wie in Fig. 5 gezeigt. Zwischen dem Liegebereich 110 und dem Fressbereich 120 der zweiten Gruppe ist ein weiterer Laufgang 130 angeordnet, der an einem seiner Enden, dem Ende 132 in den zweiten Laufgang 40 mündet. Ferner weist der Stall eine Einrichtung zum Heraustreiben der Kühe der zweiten Gruppe aus ihrem Liegebereich 110 in den weiteren Laufgang 130 und in den zweiten Laufgang 40 auf. Der in Fig. 5 gezeigte Stall weist zudem einen Liegebereich 210 auf, der einer dritten Gruppe von Kühen zugeordnet ist. Dieser dritte Liegebereich umfasst weitere 55 nebeneinander liegende Liegeboxen 212. Außerdem weist der Stall einen weiteren Fressbereich 220 mit weiteren bis zu 55 Fressplätzen an dem Futtertisch 125 für die dritte Gruppe von Kühen auf. Zwischen dem Liegebereich 210 und dem Fressbereich 220 der dritten Gruppe ist ein weiterer Laufgang 230 angeordnet, der an einem seiner Enden, dem Ende 232 in den zweiten Laufgang 40 mündet. Ferner weist der Stall eine Einrichtung zum Heraustreiben der Kühe der dritten Gruppe aus ihrem Liegebereich 210 in den weiteren Laufgang 230 und in den zweiten Laufgang 40 auf. Weiterhin ist in dem Stall ein Liegebereich 310 zu sehen, der einer vierten Gruppe von Kühen zugeordnet ist. Dieser vierte Liegebereich umfasst nebeneinander liegende Liegeboxen 312. Außerdem weist der Stall einen weiteren Fressbereich 320 mit Fressplätzen an dem Futtertisch 125 für die vierte Gruppe von Kühen auf. Bei einer anderen Ausführungsform der Erfindung weist der vierte Fressbereich 320 einen eigenen Futtertisch auf. Um den Raum des Stalls optimal auszunutzen kann der Futtertisch 125 aber für die dritte und vierte Gruppe von Kühen verwendet werden, wie in Fig. 5 gezeigt ist. Zwischen dem Liegebereich 310 und dem Fressbereich 320 der vierten Gruppe ist ein weiterer Laufgang 330 angeordnet, der an einem seiner Enden, dem Ende 332 in den zweiten Laufgang 40 mündet. Ferner weist der Stall eine Einrichtung zum Heraustreiben der Kühe der vierten Gruppe aus ihrem Liegebereich 310 in den weiteren Laufgang 330 und in den zweiten Laufgang 40 auf. Ferner ist in dem Stall ein Liegebereich mit den Liegeboxen 512 für ausgesonderte Tiere, ein angrenzender Laufgang 530 sowie ein dazugehöriger Fressbereich mit dem Futtertisch 525 vorgesehen. Die Laufgänge 30, 130, 230, 330 und 530 sind vorzugsweise, wie in den Patenten EP1 673 971 B1 und EP 1 673 972 B1 von Hartmann beschrieben, aus Betonplatten bzw. einem Betonfertigteilesystem gefertigt. Das erfindungsgemäße Hängewagenbahnsystem umfasst mindestens einen Hängewagen, der entlang eines Schienensystems, das durch eine strichpunktierte Linie gezeigt ist, über den Futtertisch 25 und 125 sowie die nebeneinander angeordneten Liegeboxen bewegbar ist. In dem Schienensystem kann der mindestens eine Hängewagen entlang des Schienenstrangs 1 des Schienensystems über den Liegebereich 10 mit den Liegeboxen 12 bewegt werden. Ferner kann der mindestens eine Hängewagen entlang des Schienenstrangs 2 des Schienensystems über den Futtertisch 25 bewegt werden. Außerdem kann der mindestens eine Hängewagen entlang des Schienenstrangs 3 des Schienensystems über den Liegebereich 110 mit den Liegeboxen 112 bewegt werden. Analog zu den Schienensträngen 1 bis 3 kann der mindestens eine Hängewagen entlang des Schienenstrangs 4 des Schienensystems über den Liegebereich 210 mit den Liegeboxen 212, entlang des Schienenstrangs 5 des Schienensystems über den Futtertisch 125 und entlang des Schienenstrangs 6 des Schienensystems über den Liegebereich 310 mit den Liegeboxen 312 bewegt werden. Darüber hinaus kann der mindestens eine Hängewagen entlang des Schienenstrangs 8 des Schienensystems über den Futtertisch 525 bewegt werden. Außerdem kann der mindestens eine Hängewagen entlang des Schienenstrangs 7 des Schienensystems über den Liegebereich mit den Liegeboxen 512 bewegt werden. In der Fig. 5 sind die Schienenstränge 1 bis 6 im Bereich des zweiten Laufgangs 40 und die Schienenstränge 7 und 8 auf der linken Seite des Stalls in Fig. 5 miteinander verbunden, während sie in Richtung der rechten Seite des Stalls in Fig. 5 als Einbahnschienenstränge ausgeführt sind. Bei einer weiteren Ausführungsform der Erfindung sind die Schienenstränge 1 bis 8 nicht als Einbahnschienenstränge ausgeführt, sondern auch am anderen Ende miteinander verbunden. Bei einer weiteren Ausführungsform sind nur bestimmte Schienenstränge miteinander verbunden, z. B. die Schienenstränge die über einen Futtertisch führen, also die Schienenstränge 2 und 5 und 8 entlang derer ein Hängewagen über die Futtertische 25, 125 und 525 bewegt werden kann. Es können aber auch insbesondere die Schienenstränge miteinander verbunden sein, die über Liegeboxen führen, also die Schienenstränge 1 und 3 oder 1 und 4 oder 1 und 6 oder 1 und 7 oder 1 und 3 und 4 und 6 und 7, sodass ein Hängewagen auf kürzestem Weg über die Liegeboxen 12, 112, 212, 312 und 512 bewegt werden kann. Im Bereich des zweiten Laufgangs, an der linken Stirnseite des Stalls in Fig. 5, sind die Vorratscontainer 91, 92, 93 und 94 zu sehen. Darin kann Futter und Einstreumaterial bevorratet werden. Ferner sind diese Vorratscontainer vorzugsweise so eingerichtet, dass damit der mindestens eine Hängewagen mit Futter und/oder Einstreumaterial befüllt werden kann, wie in Fig. 8 gezeigt.

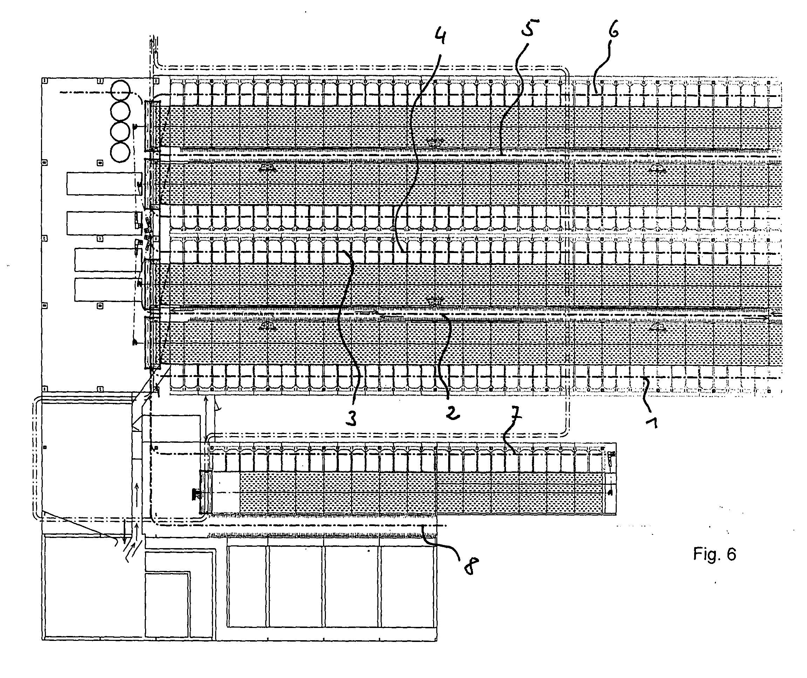

Die Fig. 6 zeigt eine Detailansicht der Fig. 5.

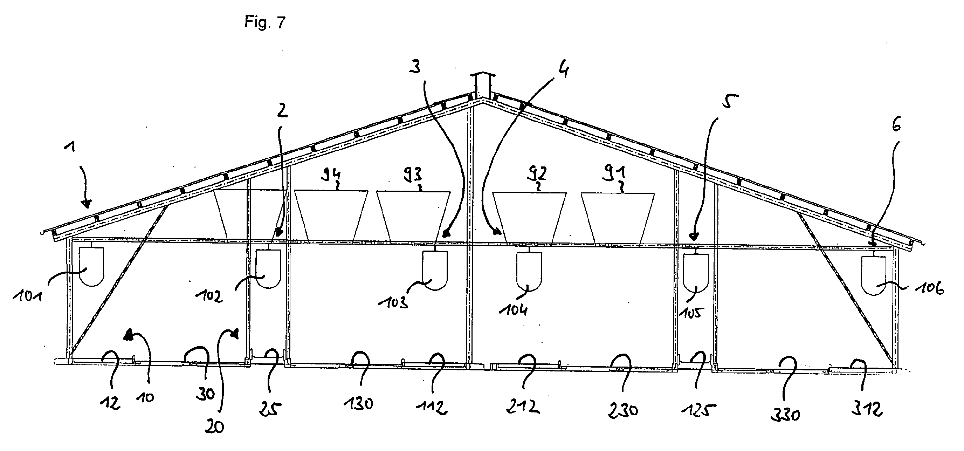

Die Fig. 7 zeigt einen Querschnitt durch einen Teil des Stalls der Fig. 5 bzw. 6. Sie zeigt einen Querschnitt durch den Liegebereich 10 mit einer Liegebox 12, den Laufgang 30, den Fressbereich 20 am Futtertisch 25, den Laufgang 130, eine Liegebox 112 und 212, den Laufgang 230, den Futtertisch 125, den Laufgang 330 sowie eine Liegebox 312. Das erfindungsgemäße Hängewagenbahnsystem umfasst darin die sechs Hängewägen 101, 102, 103, 104, 105 und 106 in den Schienensträngen 1, 2, 3, 4, 5 und 6. Das Schienensystem mit den Schienensträngen 1 bis 6 ist im gesamten Stall in einer Höhe angebracht, die gewährleistet, dass die Hängewägen im Bereich einer im zweiten Laufgang 40 (siehe Fig. 1 bzw. 5) vorgesehenen und entlang des Hängewagenbahnsystem verlaufenden oder kreuzenden Viehtreibereinrichtung, die vorzugsweise als Mistschieber zur Reinigung des zweiten Laufgangs 40 ausgeführt ist, über diese Viehtreibereinrichtung bewegbar ist. Eine solche Viehtreibereinrichtung kann eine solche sein, wie sie in Fig. 4 als Einrichtung 80 gezeigt ist. Außerdem können die Hängewägen auch problemlos über die Tiere im Stall und das Betriebspersonal bewegt werden. Dadurch kann ein störungsfreier Betrieb des erfindungsgemäßen Hängewagenbahnsystems und Verfahrens zur (a) Versorgung eines Futtertisches in einem Kuhstall mit Futter, (b) Reinigung des Futtertisches und von nebeneinander angeordneten und an einen Laufgang angrenzenden Liegeboxen für Kühe und (c) Versorgung der Liegeboxen mit Einstreumaterial gewährleistet werden, während gleichzeitig ein systematisches Melkverfahren durchgeführt wird, bei dem Tiere, gegebenenfalls verschiedener Gruppen, systematisch in ihren Gruppen zum Melken gebracht werden, wobei während dieses systematischen Melkens der Futtertisch gereinigt und wieder mit Futter versorgt wird und die Liegeboxen der Tiere gereinigt und mit frischem Einstreumaterial versorgt werden. Anstelle der sechs Hängewägen 1 bis 6 kann das erfindungsgemäße Hängewagenbahnsystem auch nur mit einem einzigen Hängewagen betrieben werden. Vorzugsweise werden mindestens zwei Hängewägen eingesetzt, von denen mindestens einer nur zur Reinigung eines Futtertischs oder mehrerer Futtertische und Versorgung desselben bzw. derselben mit Futter vorgesehen ist und der mindestens eine weitere nur zur Reinigung von Liegeboxen und Versorgung derselben mit Einstreumaterial vorgesehen ist. Diese Hängewägen umfassen dann vorzugsweise nur einen Vorratsbehälter zur Aufnahme des Futters bzw. Einstreumaterials.

Ein bevorzugtes erfindungsgemäßes Verfahren zur
(a) Versorgung eines Futtertisches in einem Kuhstall mit Futter,
(b) Reinigung des Futtertisches und von nebeneinander angeordneten und an einen Laufgang angrenzenden Liegeboxen für Kühe und
(c) Versorgung der Liegeboxen mit Einstreumaterial, wird so gesteuert, dass mindestens ein Hängewagen nur für den Betrieb zwischen Vorratscontainer(n) und Futtertisch(en) vorgesehen wird und mindestens ein weiterer Hängewagen nur für den Betrieb zwischen Vorratscontainer(n) und Liegeboxen vorgesehen wird.

Die Fig. 8 zeigt einen Querschnitt durch den Vorratscontainer 91. Dieser umfasst den Kratzboden 98 mit dem der Vorratsbehälter des Hängewagens 101 mit Futter oder Einstreumaterial, das über den Kratzboden nach oben befördert wird, befüllt werden kann. Wenn verschiedene Futtersorten aus verschiedenen Vorratscontainern in den gleichen Vorratsbehälter des Hängewagens gefüllt wird, können diese mit einem Mischer gemischt werden. Dieser Mischer kann im Hängewagen vorgesehen sein. Bevorzugt ist ein solcher Mischer jedoch außerhalb des Hängewagens vorgesehen, vor allem wenn größere Kräfte zur Durchmischung erforderlich sind.

Eine bevorzugte Reinigungseinrichtung eines Hängewagens eines erfindungsgemäßen Hängewagenbahnsystem umfasst eine Bürste mit Borsten, die vorzugsweise um eine zu dem Laufgang 30 im Wesentlichen parallel angeordnete Achse rotiert werden können. Diese Achse kann gegenüber dem Laufgang leicht geneigt sein. Die Reinigungseinrichtung kann ferner Abdeckungsflächen aufweisen, die ein Gehäuse um die Bürste bilden, wobei das Gehäuse eine Öffnung aufweist, die zu einem Laufgang hin gerichtet sein können. Somit können durch die rotierende Bürste Verunreinigungen, die sich auf der Liegefläche einer Liegebox befinden und beispielsweise Einstreu und Exkremente der Kühe umfassen, zielgerichtet von der Liegebox auf einen Laufgang gebürstet werden. Die auf den Laufgang gebürsteten Verunreinigungen können dann mit einer vorzugsweise als Mistschieber ausgeführten Viehtreibereinrichtung mit den Schieberarmen von einem Ende des ersten Laufgangs zu dem anderen Ende des Laufgangs und dort in einen Misteinwurf hineingeschoben werden. Eine als Mistschieber ausgeführte Viehtreibereinrichtung ist besonders bevorzugt so ausgeführt, dass die Schieberarme nicht nur feste Verunreinigungen sondern auch Flüssigkeiten vollständig von dem Laufgang in den Misteinwurf hineinschieben können, so dass der Laufgang im Wesentlichen vollständig gereinigt wird. Die gemäß der Erfindung eingesetzte Reinigungseinrichtung hat den Vorteil, dass eine kontinuierliche Reinigung aller nebeneinander angeordneten Liegeboxen erfolgen kann. Dies führt zu einem effizienten und zeitsparenden Verfahren. Außerdem kann die Reinigung so durchgeführt werden, dass die Kühe nicht in ihren Ruhephasen, insbesondere dem Wiederkäuen, gestört werden, da sie sich während der Reinigung nicht in dem Liege- und Fressbereich aufhalten. Dies verbessert die Leistungsfähigkeit der Kühe und erhöht so die Milchproduktion. Außerdem können die Liegeboxen gründlicher gereinigt werden, so dass die Stallhygiene verbessert wird.

Bei einer weiteren Ausführungsform der Erfindung umfasst die Reinigungseinrichtung eine rotierbare Bürste, wobei die Rotationsachse der Bürste gegenüber der Vertikalen zur Liegfläche der Liegebox geneigt ist, und die nebeneinander angeordneten Liegeboxen kontinuierlich durch die an den Liegeboxen vorbei bewegbare Reinigungseinrichtung gereinigt werden können. Bei weiteren vorteilhaften Ausführungsformen der Erfindung, werden die Bürsten der Reinigungseinrichtung in einer Richtung von dem Kopfende der Liegeboxen in Richtung zu dem Ende der Liegeboxen, das dem Laufgang zwischen dem Liege- und Fressbereich angeordnet ist, bewegt.

Der mindestens eine Hängewagen kann selbst einen Vorratsbehälter für Einstreumaterial aufweisen oder nur eine Aufbringungsvorrichtung, wie ein Rohr über das von einem nicht mit dem Hängewagen mit bewegbaren Vorrat das Einstreumaterial auf die Liegeflächen der Liegeboxen, zum Beispiel mit einem Gebläse, aufgebracht werden kann. Vorzugsweise weist ein Hängewagen jedoch einen Vorratsbehälter mit einer Öffnung als Auswurf auf. Der Auswurf ist vorzugsweise mit einem Verschluss versehen, der geöffnet werden kann, so dass das Einstreumaterial auf die Liegeboxen herabfallen kann. Bei einer bevorzugten Ausführungsform kann der Vorratsbehälter eine Schnecke oder ein Band zum Transport des Einstreumaterials zu dem Auswurf aufweisen. Die entsprechende Menge an Einstreumaterial, die auf die Liegefläche einer Liegebox eingebracht werden soll, kann über die Geschwindigkeit mit welcher der Hängewagen an nebeneinander liegenden Liegeboxen vorbei bewegt wird, die Größe des Auswurfs bzw. die durch den Verschluss des Auswurfs steuerbare Größe des Auswurfs und die Höhe, in welcher der Auswurf über der Liegefläche vorgesehen ist, eingestellt werden. Bei einer weiteren Ausführungsform wird das Einstreumaterial auf die Liegeboxen geblasen.

Der in Fig. 1 und 5 bzw. 6 und 7 gezeigte und oben beschriebene erfindungsgemäße Stall kann dazu eingerichtet sein, dass darin das erfindungsgemäße Verfahren zur (a) Versorgung eines Futtertisches in einem Kuhstall mit Futter, (b) Reinigung des Futtertisches und von nebeneinander angeordneten und an einen Laufgang angrenzenden Liegeboxen für Kühe und (c) Versorgung der Liegeboxen mit Einstreumaterial durchgeführt wird, wobei der mindestens eine Hängewagen des Hängewagenbahnsystem nach einem der Ansprüche 1 bis 10 über den Futtertisch und die nebeneinander angeordneten Liegeboxen bewegt wird.

Mit der Reinigungseinrichtung des mindestens einen Hängewagens kann besonders vorteilhaft ein Reinigen der Liegeboxen in dem Drittel der einzelnen Liegeboxen durchgeführt werden, das dem Laufgang zugewandt ist.

Gemäß der Erfindung schließt ein Verfahren zur Reinigung von Liegeboxen ein, dass nach dem Reinigen der Liegeboxen frisches Einstreumaterial, das vorzugsweise Strohhäcksel oder Sägemehl umfasst, auf die einzelnen Liegeboxen aufgebracht wird, vorzugsweise auf das Drittel der einzelnen Liegeboxen, das dem Laufgang zugewandt ist.

Ganz besonders bevorzugt ist ein Verfahren, das auch ein Melken von Kühen nach den folgenden Schritten umfasst:
(a) ein Zusammentreiben mindestens einer ersten Gruppe von Kühen, die sich in einem der ersten Gruppe zugeordneten Liege- und Fressbereich 10, 20 eines Stalls aufhalten, wobei der Liegebereich 10 die Liegeboxen 12 umfasst, über einen ersten Laufgang 30, der zwischen dem Liege- und Fressbereich angeordnet ist, auf einen zweiten Laufgang 40, durch eine Viehtreibereinrichtung 80, die von einem ersten Ende 31 des ersten Laufgangs zu einem zweiten Ende 32 des ersten Laufgangs bewegt wird, an dem der erste Laufgang in den zweiten Laufgang 40 mündet,
(b) ein Hineintreiben der Gruppe von Kühen von dem zweiten Laufgang, gegebenenfalls über einen Vorwartehof 50, in einen Melkraum 60, in dem die Kühe gemolken werden;
(c) das Reinigen der Liegeboxen des der ersten Gruppe zugeordneten Liegebereichs mit oben beschriebenen Verfahren bzw. Hängewagenbahnsystems, und
(d) ein Zurücktreiben der gemolkenen Kühe in den der ersten Gruppe zugeordneten Liege- und Fressbereich 10, 20.

Eine weitere Ausführungsform umfasst folgende Schritte:
(a') ein Zusammentreiben einer weiteren Gruppe von Kühen, die sich in einem der weiteren Gruppe zugeordneten weiteren Liege- und Fressbereich 110, 120; 210, 220; 310, 320; 410, 420 des Stalls aufhalten, über einen weiteren Laufgang 130, 230, 330, 430, der zwischen dem weiteren Liege- und Fressbereich angeordnet ist, auf den zweiten Laufgang 40, durch eine weitere Viehtreibereinrichtung 180, 280, 380, 480, die von einem ersten Ende 131, 231, 331, 431 des weiteren Laufgangs zu einem zweiten Ende 132, 232, 332, 432 des weiteren Laufgangs bewegt wird, an dem der weitere Laufgang in den zweiten Laufgang 40 mündet,
(b') ein Hineintreiben der weiteren Gruppe von Kühen von dem zweiten Laufgang, gegebenenfalls über einen Vorwartehof 50, in einen Melkraum 60, in dem die Kühe gemolken werden;
(c') ein Reinigen der Liegeboxen des der weiteren Gruppe zugeordneten Liegebereichs 110, 210, 310, 410 gemäß einem der Verfahren wie es oben beschrieben ist, und
(d') ein Zurücktreiben der gemolkenen Kühe in den der weiteren Gruppe zugeordneten Liege- und Fressbereich,
vorzugsweise mit der Massgabe, dass die Schritte (a') bis (d') für die weitere Gruppe von Kühen nach den Schritten (a) bis (d) durchgeführt werden.

Insbesondere kann in dem Stall gemäß Fig. 1 und 5 bzw. 6 und 7 folgendes Verfahren ausgeführt werden:
Eine erste Gruppe von Kühen, die sich in dem der ersten Gruppe zugeordneten Liege- und Fressbereich 10 und 20 des Stalls aufhält, kann auf den ersten Laufgang 30, der zwischen dem Liege- und Fressbereich 10 und 20 angeordnet ist, zusammengetrieben werden, wobei der Liegebereich 10 nebeneinander liegende Liegeboxen 12 umfasst.
Ferner kann die auf den ersten Laufgang 30 zusammengetriebene erste Gruppe von Kühen in den zweiten Laufgang 40, der sich an dem Ende 32 des ersten Laufgangs 30 befindet, getrieben werden.
Weiterhin kann die Gruppe von Kühen von dem zweiten Laufgang 40 über den Vorwartehof 50 in den Melkraum 60, in dem die Kühe gemolken werden, getrieben werden.
Außerdem können die gemolkenen Kühe in den der ersten Gruppe zugeordneten Liege- und Fressbereich 10 und 20 zurückgetrieben werden.

Durch dieses Verfahren wird gewährleistet, dass alle Kühe, die in einer Gruppe zusammengefasst und einem Liege- und Fressbereich zugeordnet sind, zwangsweise gemolken werden. Auf diese Weise werden zusätzliche Überwachungstätigkeiten und ein Aussondern und Melken einzelner Tiere, die sich ungern oder gar nicht von einem in einem Stall aufgestellten frei zugänglichen Melkroboter melken lassen, vermieden. Somit kann einerseits der Arbeits- und Zeitaufwand für das Bedienungspersonal verringert und andererseits die Milchproduktion gesteigert werden. Denn mit dem erfindungsgemäßen Verfahren kann bei einer bevorzugten Ausführungsform erreicht werden, dass alle einer Gruppe zugeordneten Kühe, mindestens dreimal pro Tag gemolken werden.

Bei einer bevorzugten Ausführungsform der Erfindung umfasst das Verfahren, insbesondere das Melkverfahren, außerdem:
ein Zusammentreiben einer zweiten Gruppe von Kühen, die sich in einem der zweiten Gruppe zugeordneten Liege- und Fressbereich 110 und 120 des Stalls aufhalten, auf einen weiteren Laufgang 130, der zwischen dem weiteren Liege- und Fressbereich 110 und 120 angeordnet ist, wobei der weitere Liegebereich 110 nebeneinander liegende Liegeboxen 112 umfasst;
ein Treiben der in Schritt (a') auf den weiteren Laufgang 130 zusammengetriebenen zweiten Gruppe von Kühen in den zweiten Laufgang 40, der sich an dem Ende 132 des weiteren Laufgangs 130 befindet;
ein Hineintreiben der zweiten Gruppe von Kühen von dem zweiten Laufgang 40, über den Vorwartehof 50, in den Melkraum 60, in dem die Kühe gemolken werden; und
ein Zurücktreiben der gemolkenen Kühe in den der zweiten Gruppe zugeordneten Liege- und Fressbereich 110 und 120.

Besonders bevorzugt werden die Schritte (a') bis (d') für die zweite Gruppe von Kühen erst dann durchgeführt, nachdem die entsprechenden Schritte für die erste Gruppe vollständig durchgeführt wurden, d.h. dass sich die erste Gruppe nach dem Melken wieder in ihrem Liege- und Fressbereich 110 und 120 befindet, bevor die zweite Gruppe von Kühen im Schritt (a') auf den Laufgang 130 getrieben wird. Bei einer anderen Ausführungsform, kann die zweite Gruppe zum Beispiel auf den Laufgang 130 oder in den Vorwartehof 50 getrieben werden, bevor die erste Gruppe nach dem Melken wieder zurück in den ihr zugeordneten Liege- und Fressbereich 10, 20 getrieben wird.

Bei einer weiteren Ausführungsform können zum Beispiel die folgenden Schritte durchgeführt werden. Insbesondere können bei dem Melkverfahren die vier Schritte des vorgenannten Verfahrens mit mehreren weiteren Gruppen von Kühen durchgeführt werden, vorzugsweise der Art, dass die genannten Schritte für jede weitere Gruppe von Kühen nach den vier Schritten für die vorhergehende Gruppe durchgeführt werden. So können zum Beispiel die folgenden Schritte durchgeführt werden:
Eine dritte Gruppe von Kühen, die sich in dem der dritten Gruppe zugeordneten Liege- und Fressbereich 210 und 220 des Stalls aufhalten, kann auf den weiteren Laufgang 230, der zwischen dem weiteren Liege- und Fressbereich 210 und 220 angeordnet ist, getrieben werden, wobei der weitere Liegebereich 210 nebeneinander liegende Liegeboxen 212 umfasst.

Die auf den weiteren Laufgang 230 zusammengetriebene dritte Gruppe von Kühen kann in den zweiten Laufgang 40, der sich an dem Ende 232 des weiteren Laufgangs 230 befindet, getrieben werden.

Die dritte Gruppe von Kühen kann von dem zweiten Laufgang 40, über den Vorwartehof 50, in den Melkraum 60, in dem die Kühe gemolken werden, getrieben werden.

Und die gemolkenen Kühe der dritten Gruppe können in den der dritten Gruppe zugeordneten Liege- und Fressbereich 210 und 220 zurückgetrieben werden.

Diese Schritte werden vorzugsweise durchgeführt, nachdem für die zweite Gruppe von Kühen die entsprechenden Schritte durchgeführt wurden. Ferner können diese Schritte auch für eine vierte und/oder fünfte oder noch weitere Gruppe von Kühen durchgeführt werden. So können zum Beispiel die folgenden Schritte durchgeführt werden:
Eine vierte Gruppe von Kühen, die sich in dem der vierten Gruppe zugeordneten Liege- und Fressbereich 310 und 320 des Stalls aufhalten, kann auf den weiteren Laufgang 330, der zwischen dem weiteren Liege- und Fressbereich 310 und 320 angeordnet ist, getrieben werden, wobei der weitere Liegebereich 310 nebeneinander liegende Liegeboxen 312 umfasst.

Die auf den weiteren Laufgang 330 zusammengetriebene vierte Gruppe von Kühen kann in den zweiten Laufgang 40, der sich an dem Ende 332 des weiteren Laufgangs 330 befindet, getrieben werden.

Die vierte Gruppe von Kühen kann von dem zweiten Laufgang 40, über den Vorwartehof 50, in den Melkraum 60, in dem die Kühe gemolken werden, getrieben werden.

Und die gemolkenen Kühe der vierten Gruppe können in den der vierten Gruppe zugeordneten Liege- und Fressbereich 310 und 320 zurückgetrieben werden.

Eine fünfte Gruppe von Kühen, die sich in dem der fünften Gruppe zugeordneten Liege- und Fressbereich 410 und 420 (siehe Fig. 1) des Stalls aufhalten, kann auf den weiteren Laufgang 430, der zwischen dem weiteren Liege- und Fressbereich 410 und 420 angeordnet ist, getrieben werden, wobei der weitere Liegebereich 410 nebeneinander liegende Liegeboxen 412 umfasst.

Die auf den weiteren Laufgang 430 zusammengetriebene vierte Gruppe von Kühen kann in den zweiten Laufgang 40, der sich an dem Ende 432 des weiteren Laufgangs 430 befindet, getrieben werden.

Die fünfte Gruppe von Kühen kann von dem zweiten Laufgang 40, über den Vorwartehof 50, in den Melkraum 60, in dem die Kühe gemolken werden, getrieben werden.

Und die gemolkenen Kühe der fünften Gruppe können in den der fünften Gruppe zugeordneten Liege- und Fressbereich 410 und 420 zurückgetrieben werden.

Bei weiteren vorteilhaften Ausführungsformen der vorliegenden Erfindung erfolgt das Zusammentreiben in Schritt (a) durch Betätigung einer ersten Treib- und Absperrvorrichtung 70 zum Heraustreiben von Kühen aus ihrem Liegebereich 10 in den ersten Laufgang 30 und zum Absperren des Liegebereichs 10, und gegebenenfalls kann durch Betätigung einer zweiten Treib- und Absperrvorrichtung (nicht gezeigt) ein Heraustreiben von Kühen aus ihrem Fressbereich 20 in den ersten Laufgang 30 und zum Absperren des Fressbereichs 20 erfolgen.

Ferner kann das Zusammentreiben in Schritt (a') durch Betätigung einer weiteren ersten Treib- und Absperrvorrichtung zum Heraustreiben von Kühen aus ihrem Liegebereich 110, 210, 310, 410 in den entsprechenden weiteren Laufgang 130, 230, 330, 430 und zum Absperren des Liegebereichs 110, 210, 310, 410 erfolgen, und gegebenenfalls kann durch Betätigung einer weiteren zweiten Treib- und Absperrvorrichtung (nicht gezeigt) zum Heraustreiben von Kühen aus ihrem Fressbereich 120, 220, 320, 420 in den entsprechenden weiteren Laufgang 130, 230, 330, 430 Laufgang und zum Absperren des Fressbereichs 120, 220, 320, 420 erfolgen.

Vorzugsweise werden durch Betätigung der ersten oder gegebenenfalls der weiteren ersten Treib- und Absperrvorrichtung(en) zum Heraustreiben von Kühen aus ihrem Liegebereich jeweils alle Kühe einer Gruppe, die sich in dem ihrer Gruppe zugeordneten Liegebereich aufhalten, aus diesem Liegebereich gleichzeitig in den ersten oder gegebenenfalls weiteren Laufgang getrieben, und die erste oder gegebenenfalls die weitere(n) erste(n) Treib- und Absperrvorrichtung(en) kann oder können so ausgebildet sein, dass der für die jeweilige Gruppe zugeordnete Liegebereich für alle Kühe dieser Gruppe unzugänglich abgesperrt wird. Dazu ist zum Beispiel für jede Liegebox, die in Fig. 2 gezeigte Treib- und Absperrvorrichtung 70 vorgesehen, und alle solchen Treib- und Absperrvorrichtungen, die in einem einer Gruppe von Kühen zugeordneten Liegebereich vorgesehen sind, werden dann gleichzeitig betätigt, so dass alle Kühe einer Gruppe auf den Laufgang getrieben werden, der zwischen dem dieser Gruppe zugeordneten Liege- und Fressbereich angeordnet ist. Dieses Verfahren kann noch verbessert werden durch Betätigung der zweiten und gegebenenfalls der weiteren zweiten Treib- und Absperrvorrichtung(en) zum Heraustreiben von Kühen aus ihrem Fressbereich in den ersten oder weiteren Laufgang zwischen Liege- und Fressbereich und zum Absperren ihres Fressbereichs, so dass alle Kühe einer Gruppe, die sich in dem ihrer Gruppe zugeordneten Fressbereich aufhalten, aus diesem Fressbereich gleichzeitig in den ersten oder gegebenenfalls weiteren Laufgang getrieben werden.

Das Treiben der ersten Gruppe von Kühen in den zweiten Laufgang 40 kann durch Betätigung der Viehtreibereinrichtung 80 erfolgen, die von dem Ende 31 des ersten Laufgangs 30 zu einem Ende 32 des ersten Laufgangs 30, an dem der zweite Laufgang 40 angeordnet ist, hinbewegt wird.

Ferner erfolgt das Treiben einer weiteren Gruppe von Kühen Schritt (a') des Reinigungsverfahrens oder in Schritt (b') des Melkverfahrens in den zweiten Laufgang 40 vorzugsweise durch Betätigung einer weiteren Viehtreibereinrichtung 180, 280, 380, 480, die von einem ersten Ende 131, 231, 331, 431 des weiteren Laufgangs 130, 230, 330 oder 430 zu dem Ende 132, 232, 332, 432 des weiteren Laufgangs 130, 230, 330, 430, an dem der zweite Laufgang angeordnet ist, hinbewegt wird.

Weiterhin ist bevorzugt, dass die Viehtreibereinrichtung 80 oder die weitere Viehtreibereinrichtung 180, 280, 380, 480 als Mistschieber ausgeführt ist, so dass mit der Viehtreibereinrichtung 80 oder der weiteren Viehtreibereinrichtung 180, 280, 380, 480 Mist oder andere Verunreinigungen, einschließlich von Flüssigkeiten, in dem jeweiligen Laufgang 30, 130, 230, 330, 430 geräumt werden können. Die Viehtreibereinrichtung kann aber auch durch einen Hängewagen gebildet werden, der eine Teleskopausrüstung umfasst, die in den Liegebereich und Fressbereich hineinragt, wenn der Hängewagen als Viehtreibereinrichtung verwendet wird.

Gemäß eines bevorzugten Verfahrens der Erfindung wird ein akustisches Signal, vorzugsweise ein Klingel- oder Hornsignal, und/oder optisches vor der Betätigung der ersten und/oder zweiten sowie gegebenenfalls der weiteren ersten und/oder weiteren zweiten Treib- und Absperrvorrichtung, der Viehtreibereinrichtung sowie gegebenenfalls der weiteren Viehtreibereinrichtung und/oder vor dem Hineintreiben einer Gruppe von Kühen von dem zweiten Laufgang, gegebenenfalls über den Vorwartehof, in den Melkraum gegeben.

Vorzugsweise wird vor dem Treiben einer Gruppe von Kühen in den zweiten Laufgang eine Absperrung zwischen dem ersten Laufgang 30 und dem zweiten Laufgang 40 oder zwischen dem weiteren Laufgang 130, 230, 330, 430 und dem zweiten Laufgang 40 geöffnet.

Außerdem kann nach oder während des Treibens einer Gruppe von Kühen, gegebenenfalls über den Vorwartehof 50, in den Melkraum 60, die Absperrung zwischen dem ersten Laufgang 30 und dem zweiten Laufgang 40 oder zwischen dem weiteren Laufgang 130, 230, 330, 430 und dem zweiten Laufgang 40 geschlossen werden. Damit wird auf einfache Art und Weise ein Eindringen von Kühen in den Liege- und Fressbereich einer anderen Gruppe vermieden, wenn die oben beschriebenen Schritte (a') bis (d') für die weitere Gruppe von Kühen nicht erst nach den Schritten (a) bis (d) für die erste Gruppe durchgeführt werden bzw. wenn die Schritte (a') bis (d') für jede weitere Gruppe von Kühen nicht erst nach den Schritten (a') bis (d') für die vorhergehende Gruppe durchgeführt werden.

In dem Melkraum 60 können die Kühe unter Erkennung jeder einzelnen Kuh gemolken werden, so dass die gemolkene Milch jeder einzelnen Kuh analysiert werden kann, vorzugsweise durch Messung der Leitfähigkeit der Milch. Somit kann durch ein Vorbeitreiben der gemolkenen Kühen an einer Schleuse unter Erkennung der einzelnen Kühe gegebenenfalls eine Absonderung einer Kuh aus ihrer Gruppe erfolgen, wenn die gemolkene Milch dieser Kuh auffällig ist. Nach der Aussonderung kann die Kuh eingehender untersucht und gegebenenfalls behandelt werden. Die abgesonderten Kühe können vorteilhaft vor und während einer Untersuchung und gegebenenfalls einer Behandlung in einem abgetrennten Liege- und Fressbereich untergebracht werden, der z. B. die Liegeboxen 512, den Laufgang 530 und den Futtertisch 525 umfasst, siehe Fig. 5. Dies hat den Vorteil, dass die Milchproduktion der gesunden Tiere in den ihnen zugeordneten Liege- und Fressbereichen nicht gestört wird.

In einer bevorzugten Ausführungsform der Erfindung werden die Liegeboxen einer Gruppe von Kühen vor dem Zurücktreiben der gemolkenen Kühe in den der jeweiligen Gruppe zugeordneten Liege- und Fressbereich gereinigt. Besonders bevorzugt wird bei der Reinigung der Liegeboxen mit der Liegebox begonnen, die an dem Ende 32, 132, 232, 332, 432 des ersten oder weiteren Laufgangs 30, 130, 230, 330, 430 angeordnet ist, das in den zweiten Laufgang 40 mündet. Dies geschieht vorteilhafter Weise unter Einsatz mindestens eines Hängewagens, der die oben beschriebene Reinigungseinrichtung umfasst.

Damit können die Liegeboxen kontinuierlich und äußerst zeitsparend gereinigt werden. Außerdem werden die Kühe dadurch nicht in ihren Ruhephasen beim Wiederkäuen gestört, da die Reinigung erfolgt, während die Kühe auf dem Weg zum oder beim Melken oder auf dem Weg zurück sind. Somit kann in dem erfindungsgemäßen Stall durch das erfindungsgemäße Verfahren ein sehr hoher Hygienestandard unter Steigerung der Milchproduktion erzielt werden. Vorzugsweise wird die Absperrung zwischen dem Laufgang 30, 130, 230, 330, 430, der gereinigt werden soll, und dem zweiten Laufgang 40 geschlossen, bevor mit der Reinigung begonnen wird.

Besonders bevorzugt wird das Reinigen der Liegeboxen in dem Drittel der einzelnen Liegeboxen durchgeführt, das dem ersten oder weiteren Laufgang 30 oder 130, 230, 330, 430 zugewandt ist. So kann die Reinigung effizienter und schneller durchgeführt werden.

Besonders bevorzugt wird nach dem Reinigen der Liegeboxen frisches Einstreumaterial, das vorzugsweise Strohhäcksel oder Sägemehl umfasst, auf die Liegeboxen aufgebracht, vorzugsweise auf das Drittel der einzelnen Liegeboxen, das dem ersten 30 oder weiteren Laufgang 130, 230, 330, 430 zugewandt ist.

Bei einer besonders bevorzugten Ausführungsform der Erfindung umfasst der Stall eine zentrale Steuereinrichtung mit der gegebenenfalls alle Verfahren, die oben beschrieben sind automatisch gesteuert werden. Besonders bevorzugt wird vor einem Heraustreiben einer Gruppe von Tieren aus ihrem Liegebereich zunächst das Futter mit einem Hängewagen des erfindungsgemäßen Hängewagenbahnsystems von dem Futtertisch der Gruppe automatisch entfernt. Gegebenenfalls kann dann eine Treib- und Absperrvorrichtung betätigt werden, um alle Tiere dieser Gruppe zwangsweise aus dem Fressbereich heraus zu treiben. Danach wird das Selbstfangoder Fressgitter in dem Fressbereich automatisch gesperrt, so dass kein Tier mehr Zugang zu dem Futtertisch des Fressbereichs hat. Anschließend erst werden, ebenfalls automatisch gesteuert, die Tiere, die sich in den Liegeboxen befinden von diesen heraus auf den Laufgang zwischen Liege- und Fressbereich getrieben. Dann wird automatisch die Absperrung zwischen diesem Laufgang und dem zweiten Laufgang, sowie gegebenenfalls die Tür oder Absperrung des Eingangs zum Vorwartehof und/oder Melkraum geöffnet. Dann wird eine Viehtreibereinrichtung, die von einem Hängewagen des erfindungsgemäßen Hängewagenbahnsystems gebildet werden kann, in dem Laufgang zwischen Liege- und Fressbereich betätigt, um die Tiere von dem Laufgang über den zweiten Laufgang und gegebenenfalls über den Vorwartehof in den Melkraum zu treiben. Wenn das letzte Tier dieser Gruppe den Vorwartehof betreten hat, wird der Eingang vorzugsweise automatisch geschlossen und verriegelt. Nach einem Melken und gegebenenfalls einem Aussondern eines Tiers oder mehrerer Tiere werden die gemolkenen Tiere wieder in den Liege- und Fressbereich zurückgetrieben, vorzugsweise über einen Tränkenraum. Der Liege- und Fressbereich wird besonders bevorzugt davor gereinigt. Besonders bevorzugt wird mit der Reinigung gegebenenfalls mit einem Einstreuen der Liegeboxen, wie oben beschrieben, begonnen, wenn das letzte Tier der Gruppe vor dem Melken den Liege- und Fressbereich verlassen hat. So können die ersten Tiere, die von dem Melken zurückkehren wieder ihre angestammten Liege- und Fressplätze belegen, während gegebenenfalls noch ein Teil der Liegeboxen gereinigt wird. Bei einer besonders bevorzugten Ausführungsform der Erfindung, sind die Treib- und Absperrvorrichtungen zum Heraustreiben der Kühe aus ihrem Liegebereich noch betätigt, wenn die Tiere nach dem Melken dorthin zurückkehren, während die Selbstfang- und Fressgitter wieder geöffnet sind. Vorzugsweise ist zu diesem Zeitpunkt auch wieder frisches Futter, ebenfalls automatisch über das erfindungsgemäße Hängewagenbahnsystem befördert worden. Ferner wird bei einem besonders bevorzugten Verfahren, das Selbstfang- oder Fressgitter an den einzelnen Fressplätzen gesperrt, wenn ein Tier dort frisst. Damit werden die Tiere zwangsweise für einen vorgegebenen Zeitraum unmittelbar nach dem Melken und vorzugsweise nach der Wasseraufnahme zum Fressen gebracht, wobei nach einer vorgegebenen Zeit, dass Selbstfang- oder Fressgitter wieder geöffnet wird, so dass die Tiere dann wieder ausruhen und wiederkäuen können. Vor dem nächsten Melkvorgang dieser Gruppe, der vorzugsweise wieder mit einem Entfernen des Futters beginnt, können sich die Tiere frei zwischen Liege- und Fressbereich, der vorzugsweise auch mit Tränken ausgestattet ist, bewegen. Besonders bevorzugt wird, nachdem das letzte Tier nach dem Melken wieder in den Liege- und Fressbereich zurückgekehrt ist, die Absperrung zwischen dem Laufgang zwischen Liege- und Fressbereich und dem zweiten Laufgang geschlossen. Besonders bevorzugt wird das gleiche Verfahren automatisch für die nächste Gruppe ebenfalls von der zentralen Steuereinrichtung gesteuert betrieben. Besonders bevorzugt wird das entsprechende Verfahren für die nächste Gruppe von Tieren zeitlich so gesteuert, dass die Tiere gerade dann aus dem Laufgang zwischen ihrem Liege- und Fressbereich in den zweiten Laufgang getrieben werden, wenn die Absperrung zwischen dem Laufgang der vorigen Gruppe und dem zweiten Laufgang, ebenfalls automatisch, wieder abgesperrt wurde.

## Patentansprüche

1. Hängewagenbahnsystem für einen Kuhstall zur
(a) Versorgung eines Futtertisches (25; 125; 225; 525) mit Futter,
(b) Reinigung des Futtertisches und von nebeneinander angeordneten und an einen Laufgang angrenzenden Liegeboxen (12; 112; 212; 312; 412; 512) für Kühe und
(c) Versorgung der Liegeboxen mit Einstreumaterial,
umfassend mindestens einen Hängwagen (101; 102; 103; 104; 105; 106), der
(i) mindestens je einen Vorratsbehälter zur Aufnahme des Futters und des Einstreumaterials,
(ii) mindestens je einen Auswurf für das Futter und das Einstreumaterial und
(iii) eine Reinigungseinrichtung umfasst,
wobei der Hängewagen über den Futtertisch und die nebeneinander angeordneten Liegeboxen bewegbar ist.

2. Hängewagenbahnsystem nach Anspruch 1, wobei der mindestens eine Hängewagen im Bereich einer entlang des Hängewagenbahnsystem verlaufenden und/oder das Hängewagenbahnsystem kreuzenden Viehtreibereinrichtung (80) über diese bewegbar ist.

3. Hängewagenbahnsystem nach Anspruch 2, wobei der mindestens eine Hängewagen mindestens im Bereich der Viehtreibereinrichtung mindestens 0,80 m bis zu 2,50 m, vorzugsweise mindestens 2,00 m, über den Boden bewegt wird.

4. Hängewagenbahnsystem nach einem der vorstehenden Ansprüche, wobei die Viehtreibereinrichtung als Mistschieber zur Reinigung eines Laufgangs ausgeführt ist.

5. Hängewagenbahnsystem nach einem der vorstehenden Ansprüche, umfassend ein Schienensystem, in dem der mindestens eine Hängewagen bewegbar ist.

6. Hängewagenbahnsystem nach Anspruch 5, wobei der mindestens eine Hängewagen in dem Schienensystem entlang der Schienen vor- und wieder zurückbewegbar, gegebenenfalls auch in Richtung des Bodens nach unten und wieder zurückbewegbar, ist.

7. Hängewagenbahnsystem nach einem der vorstehenden Ansprüche, wobei der mindestens eine Vorratsbehälter des mindestens einen Hängewagens eine Mischeinrichtung, vorzugsweise eine Schnecke, aufweist.

8. Hängewagenbahnsystem nach einem der vorstehenden Ansprüche, wobei die Reinigungseinrichtung des mindestens einen Hängewagens mindestens eine den Futtertisch und/oder die Liegeflächen der Liegeboxen reinigende Bürste umfasst.

9. Hängewagenbahnsystem nach einem der vorstehenden Ansprüche, umfassend mindestens zwei Vorratscontainer zur Bevorratung von Futter und Einstreumaterial.

10. Hängewagenbahnsystem nach Anspruch 9, wobei die Vorratscontainer eine Einrichtung, vorzugsweise einen Kratzboden (98) und eine Schnecke, zur Befüllung des mindestens einen Vorratsbehälters des mindestens einen Hängewagens aufweisen.

11. Verfahren zur
(a) Versorgung eines Futtertisches in einem Kuhstall mit Futter,
(b) Reinigung des Futtertisches und von nebeneinander angeordneten und an einen Laufgang angrenzenden Liegeboxen für Kühe und
(c) Versorgung der Liegeboxen mit Einstreumaterial, wobei der mindestens eine Hängewagen des Hängewagenbahnsystem nach einem der Ansprüche 1 bis 10 über den Futtertisch und die nebeneinander angeordneten Liegeboxen bewegt wird.

12. Verfahren nach Anspruch 11, das ein Melken von Kühen nach den folgenden Schritten umfasst:
(A) ein Zusammentreiben mindestens einer ersten Gruppe von Kühen, die sich in einem der ersten Gruppe zugeordneten Liege- und Fressbereich (10, 20) eines Stalls aufhalten, wobei der Liegebereich (10) Liegeboxen (12) umfasst, über einen ersten Laufgang (30), der zwischen dem Liege- und Fressbereich angeordnet ist, auf einen zweiten Laufgang (40), durch eine Viehtreibereinrichtung (80), die von einem ersten Ende (31) des ersten Laufgangs zu einem zweiten Ende (32) des ersten Laufgangs bewegt wird, an dem der erste Laufgang in den zweiten Laufgang (40) mündet,
(B) ein Hineintreiben der Gruppe von Kühen von dem zweiten Laufgang, gegebenenfalls über einen Vorwartehof (50), in einen Melkraum (60), in dem die Kühe gemolken werden;
(C) ein Reinigen des Futtertisches des der ersten Gruppe zugeordneten Fressbereichs und ein Versorgen desselben Futtertischs mit Futter;
(D) ein Reinigen des der nebeneinander angeordneten Liegeboxen des der ersten Gruppe zugeordneten Liegebereichs und ein Versorgen derselben Liegeboxen mit Einstreumaterial und
(E) ein Zurücktreiben der gemolkenen Kühe in den der ersten Gruppe zugeordneten Liege- und Fressbereich (10, 20).

13. Verfahren nach Anspruch 12, **gekennzeichnet durch** folgende Schritte:
(A') ein Zusammentreiben einer weiteren Gruppe von Kühen, die sich in einem der weiteren Gruppe zugeordneten weiteren Liege- und Fressbereich (110, 120; 210, 220; 310, 320; 410, 420) des Stalls aufhalten, über einen weiteren Laufgang (130, 230, 330, 430), der zwischen dem weiteren Liege- und Fressbereich angeordnet ist, auf den zweiten Laufgang (40), **durch** eine weitere Viehtreibereinrichtung (180, 280, 380, 480), die von einem ersten Ende (131, 231, 331, 431) des weiteren Laufgangs zu einem zweiten Ende (132, 232, 332, 432) des weiteren Laufgangs bewegt wird, an dem der weitere Laufgang in den zweiten Laufgang (40) mündet,
(B') ein Hineintreiben der weiteren Gruppe von Kühen von dem zweiten Laufgang, gegebenenfalls über einen Vorwartehof (50), in einen Melkraum (60), in dem die Kühe gemolken werden;
(C') ein Reinigen des Futtertisches des der weiteren Gruppe zugeordneten Fressbereichs und ein Versorgen desselben Futtertischs mit Futter;
(D') ein Reinigen des der nebeneinander angeordneten Liegeboxen des der weiteren Gruppe zugeordneten Liegebereichs und ein Versorgen derselben Liegeboxen mit Einstreumaterial und
(E') ein Zurücktreiben der gemolkenen Kühe in den der weiteren Gruppe zugeordneten Liege- und Fressbereich,
vorzugsweise mit der Maßgabe, dass die Schritte (A') bis (E') für die weitere Gruppe von Kühen nach den Schritten (A) bis (E) durchgeführt werden.

14. Verfahren nach Anspruch 13, **dadurch gekennzeichnet, dass** die Schritte (A') bis (E') mit mehreren weiteren Gruppen von Kühen durchgeführt werden, vorzugsweise der Art, dass die Schritte (A') bis (E') für jede weitere Gruppe von Kühen nach den Schritten (A') bis (E') für die vorhergehende Gruppe durchgeführt werden.

15. Stall, umfassend ein Hängewagenbahnsystem nach einem der Ansprüche 1 bis 10.

16. Stall nach Anspruch 15, umfassend:
- mindestens einen Liegebereich (10), der nebeneinander angeordnete Liegeboxen (12) für mindestens eine Gruppe von Kühen umfasst,
- einen Fressbereich (20) mit Fressplätzen (22) an einem Futtertisch für die mindestens eine Gruppe von Kühen,
- einen ersten Laufgang (30) der zwischen dem Liege- und Fressbereich der ersten Gruppe angeordnet ist,
- gegebenenfalls eine erste Treib- und Absperrvorrichtung (70) zum Heraustreiben von Kühen aus ihrem Liegebereich (10) in den ersten Laufgang (30) und zum Absperren des Liegebereichs,
- gegebenenfalls eine zweite Treib- und Absperrvorrichtung zum Heraustreiben von Kühen aus ihrem Fressbereich (20) in den ersten Laufgang (30) und zum Absperren des Fressbereichs (20).

17. Stall nach einem der vorstehenden Ansprüche, zusätzlich umfassend
- einen zweiten Laufgang (40), in den der erste Laufgang (30) mündet,
- eine Viehtreibereinrichtung (80) zum Treiben der auf den ersten Laufgang (30) zusammengetriebenen ersten Gruppe von Kühen von einem ersten Ende (31) des ersten Laufgangs zu einem zweiten Ende (32) des ersten Laufgangs (30) und in den zweiten Laufgang hinein;
- gegebenenfalls einen Vorwartehof (50);
- einen Melkraum (60),
- gegebenenfalls eine Schleuse zur Erkennung einzelner Kühe und gegebenenfalls zur Absonderung einer Kuh aus einer Gruppe.

18. Stall nach Anspruch 17, wobei die Vorratscontainer des Hängewagenbahnsystems nach einem der Ansprüche 9 oder 10 im Bereich des zweiten Laufgangs angeordnet sind.

19. Stall nach einem der vorstehenden Ansprüche, **gekennzeichnet durch** eine Steuereinrichtung zur Steuerung eines der Verfahren nach einem der Ansprüche 11 bis 14.
